(19) Europäisches Patentamt
European Patent Office
Office européen des brevets

(11) **EP 4 600 872 A1**

(12) **EUROPEAN PATENT APPLICATION**

(43) Date of publication:
**13.08.2025 Bulletin 2025/33**

(21) Application number: **25156545.3**

(22) Date of filing: **07.02.2025**

(51) International Patent Classification (IPC):
***G06N 10/70*** (2022.01)       ***G06N 10/40*** (2022.01)

(52) Cooperative Patent Classification (CPC):
**G06N 10/70;** G06N 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.02.2024 US 202463550853 P**

(71) Applicant: **Xanadu Quantum Technologies Inc.**
**Toronto, Ontario M5G 2C8 (CA)**

(72) Inventors:
• **GONZALEZ ARCINIEGAS, Carlos Andres**
**Toronto, ON M4M 3E9 (CA)**
• **BOURASSA, Joseph Eli**
**Toronto, ON M4J 1C4 (CA)**
• **N. ALEXANDER, Rafael**
**Toronto, ON M4W 1N2 (CA)**
• **GLANCY, Scott Charles**
**Boulder, CO 80301 (US)**

(74) Representative: **Hoyng Rokh Monegier B.V.**
**Rembrandt Tower, 30th Floor**
**Amstelplein 1**
**1096 HA Amsterdam (NL)**

(54) **PROCESS OF GENERATING H-TYPE MAGIC STATE AND ASSOCIATED PROCESS OF PERFORMING QUANTUM COMPUTATION**

(57)    The process can include generating a Gottesman-Kitaev-Preskill (GKP) sensor state in the quantum system; generating a multi-peak state in the quantum system; generating an entangled state including performing a quantum entanglement between the GKP sensor state and the multi-peak state in the quantum system; and performing a measurement on the entangled state in the quantum system subsequently to said quantum entanglement, thereby generating the H-type magic state, the measurement being a Pauli measurement and including measuring at least one of two quantum mechanical observables satisfying a canonical commutation relation.

Fig. 1

EP 4 600 872 A1

**Description**

**BACKGROUND**

Quantum systems, i.e., systems which harness the quantum properties of matter for human use, have received significant research and development interest and activity in recent years and are expected to become more mainstream within the coming decades. A lot of this new interest is tied to the immense potential of the technology, particularly in relation to quantum computing and computerized communication security, but also in relation to other significant areas of interest.

The basic concept of performing a computation in a quantum context typically involves a quantum interaction such as entanglement between quantum states of one or more particles referred to as quantum subsystems. A typical approach to quantum computing is to make definitions of qubits based on possible quantum states in the quantum subsystem. This latter process is commonly referred to as encoding. Indeed, in a process of quantum computation, information can be encoded in the form of eigenstates of quantum subsystems. Particular hardware and complex control schemes, typically encoded as software functions and executed by a classical computer, are typically required. The definition of the qubits is typically stored in a memory of the classical computer. Different types of hardware which can host various types of quantum states exist, and the selection thereof depends on the nature of the quantum subsystem used as a resource in the quantum computation. Examples of particles which can exhibit quantum behavior at the subatomic level include electrons and photons, but other approaches exist such as phonon-based approaches or cold atom/ion-based approaches. Quantum mechanics allows the quantum subsystems to be in a coherent superposition of more than one state simultaneously, a property which is fundamental to quantum computing.

In the case of electrons, for instance, the state of the spin can be used to encode quantum information (e.g., spin up vs. spin down). In the case of photons, the state of the polarization can be used to encode quantum information (e.g., vertical polarization vs. horizontal polarization), or bosonic encoding may be used. The encoding scheme can be binary (e.g., spin up vs. spin down) or continuous variable based. In one example of an architecture using bosonic encoding, a plurality of Gaussian Boson Sampling (GBS) sources each configured to generate a continuous-variable (CV) state such as a Gottesman-Kitaev-Preskill (GKP) state may be used, and data may be mapped onto the generated CV states. Such an embodiment can be implemented in a photonic architecture where the CV states are states of light, for instance. Additional details about GKP encoding can be found in "Encoding a Qubit in an Oscillator" by D. Gottesman et al., Physical Review Letters A (64), 012310 (2001).

Indeed, various architectures have been developed in recent years, such as architectures based on superconducting circuits, quantum dots, trapped ions, photonic circuits, phonons, cold atoms, and hybrid approaches. Some architectures are perceived as more promising than others, but the overall maturity of the field is such that breakthrough, game-changing innovations are expected to continue to occur. It will be understood that while existing hardware and process steps have led to the relatively intense level of international excitement about the possibilities opened up via quantum computing, there remains much room for improvement, and many further developments will be required before quantum computers can be offered in the form of commercially available products.

In the case of many architectures, the quantum behavior is exhibited in a cryogenic environment, such as below 100 K, 50 K, 10 K or even lower, depending on the architecture, although research for quantum systems operable at higher temperatures is a highly active area of current research. Such temperatures can be sustained with a specialized refrigerator referred to as a cryostat. One feature of some photonic architectures is that the quantum states may be exhibited in a non-cryogenic environment (e.g., photonic modes used as qubits "living" at room temperature). However, even in photonic architectures, it is common to have some elements of the system operate in a cryostat, such as may be the case with some elements of a measurement system (e.g., photon number resolving (PNR) detectors).

Different forms of quantum computing exist, which typically involve using two or more quantum subsystems interconnected to one another in a manner to allow quantum interaction, typically quantum entanglement.

In adiabatic quantum computing, a specific problem is posed in the form of a configuration of interconnection between quantum subsystems which can communicate directly with one another, and the solution to the problem appears in the form of a ground state of the overall system.

In gate-based quantum computing, which can provide a "universal" computing approach, quantum gates are applied in a controlled manner. There are two common types of approaches. In the standard circuit-based model of quantum computing, quantum states are initialized in the form of a plurality of quantum subsystems, and a sequence of gates referred to as a circuit is applied by controlling the quantum interaction between some of the quantum subsystems using devices commonly referred to as couplers. The couplers are used to selectively allow or prevent the interaction between corresponding quantum subsystems. A measurement is then applied to the quantum subsystems to conclude the quantum computation.

Measurement-based quantum computation (MBQC) differs from standard circuit-based quantum computation but has been shown to have the potential to be mathematically equivalent. In measurement-based quantum computation, quantum states are initialized and entangled into cluster states. The application of the gates is performed by the way the measurement is applied, and more specifically, as a sequence of adaptive measurements where the way subsequent measurements are performed depends on the results of previous measurements. In MBQC, measurements of the quantum states (e.g., homodyne measurements of entangled photonic states) are what actually perform the quantum logic operations. In one example of photonic MBQC, a number of photonic states (e.g., GKP states, squeezed states) are produced and then entangled into a "cluster state," (e.g., a 3D lattice of optical modes). Measurements are then performed on the cluster state. These measurements are used for error correction and to perform MBQC. Therefore, in MBQC, quantum "gates" are implemented by the measurements, though MBQC maps perhaps less directly to the "circuits" of the standard circuit-based model.

Other forms of quantum computing applications can include quantum communication routers, for instance. The exact nature of the quantum subsystems and of any couplers will vary depending on the type of quantum architectures in which they are implemented.

**SUMMARY**

Universal fault-tolerant quantum computers have the potential to outperform classical computers at certain tasks. Fault tolerance - the ability to perform quantum computation in the presence of noise provided that the noise is below some threshold - can be facilitated using quantum error correction schemes. Universality - the ability to apply any quantum gate - requires the preparation of certain states, gates, and/or measurements.

Clifford quantum computation (quantum computing/computation will be referred to herein as QC for short, hence - Clifford QC) refers to quantum computation that makes use of operations restricted to Pauli eigenstate preparation, Clifford gates, and Pauli measurements. Clifford QC, while providing the necessary tools for quantum error correction, is not universal as some quantum gates cannot be represented by a finite number of Clifford operations. To achieve a universal fault-tolerant quantum computer that can outperform classical computers, Clifford QC can be supplemented by a non-Clifford resource (i.e., a non-Clifford preparation, gate, or measurement). One popular example of a non-Clifford resource is a non-Pauli eigenstate referred to as a "magic state."

In continuous-variable (CV) quantum computation, wherein the Hilbert space is infinite dimensional, Gaussian QC (comprising Gaussian state preparation, Gaussian operations, and homodyne detection) is analogous to Clifford QC. Examples of continuous-variable QC architectures include optical modes, microwave-cavity modes, and vibrational modes of trapped ions. Photonic CV QC architectures may receive a particular level of interest due to scalability and the ability to leverage existing photonic technologies. Analogously, Gaussian QC on its own is not universal. A non-Gaussian resource is required to supplement Gaussian QC for it to be universal and outperform classical computers.

Bosonic quantum error-correcting codes (or simply bosonic codes) embed discrete quantum information into CV systems. In doing so, they map CV noise into effective noise acting on the encoded qubits. One popular example of a bosonic code is the Gottesman-Kitaev-Preskill (GKP) code, explained in more detail further below. Logical-Clifford QC can then be done using logical-Clifford operations, wherein Clifford logic gates are acted on the encoded qubits. Logical-Clifford QC can be supplemented with logical-non-Clifford QC to be universal. A unique property of the GKP code is that it allows logical-Clifford QC and CV-level error correction to be implemented using Gaussian QC along with a supply of (non-Gaussian) logical-Pauli eigenstates. States referred to as "magic states" are eigenstates of a non-Pauli operator and may be used as a non-Clifford resource.

However, in practice, there are challenges to implementing a non-Gaussian resource into an architecture in a way that allows it to be practical and suitable for use in efficient quantum computation. In one example, cubic phase states are a type of magic state and can be considered as a potential non-Clifford/non-Gaussian resource. Cubic phase states, as well as non-Gaussian measurements, can be used to implement cubic phase gates. However, cubic phase states are not GKP states, and have proven, in some embodiments, to be relatively challenging to produce, particularly in photonic architectures, due to an observed difficulty to induce non-linear behavior in optics. Indeed, cubic phase states may involve highly non-linear processes to produce, which may be difficult to implement in optics.

For photonic QC architectures, protocols to produce Pauli GKP states using squeezed cat state breeding and amplification can be used. One potential scenario to consider is the adaptation of Pauli GKP state production protocols to also produce magic states, making use of the GKP Pauli eigenstates and/or sensor states that these protocols can produce. There are different types of architectures other than photonic which can be adapted to GKP encoding, such as superconductor (e.g., transmon), microwave resonators, and trapped ion for instance. Such other architectures may operate on the basis of standard circuit-based models of quantum computation rather than measurement-based quantum computation, for instance.

With respect to the preparation of magic states for GKP-based architectures, different methods may be used. For instance, in the case of photonic architectures, it was found that GKP magic state preparation can be achieved through photon-number-resolving (PNR) measurement on a GKP Bell pair, or through GKP quantum error correction on vacuum states. However, both of these approaches require two high-quality GKP states in order to prepare a magic state. In addition, the PNR approach on a GKP Bell pair does not work on displaced GKP states, which many GKP production protocols would result in. For instance, a state breeding and amplification process, such as squeezed cat state breeding and amplification for instance, typically produces displaced GKP states. In order to utilize the PNR approach, the displaced GKP states would need to undergo a corrective displacement, which would introduce additional loss. Therefore, such approaches do not satisfy a need to have a method of preparing magic states for GKP-based architectures that only requires one high-quality GKP state. Moreover, such approaches do not satisfy a need to have a method of preparing magic states for GKP-based architectures which can be done with displaced GKP states.

In light of the above considerations, H-type magic states were considered as a potential candidate for a magic state which may be used in a GKP-based architecture. H-type magic states include Hadamard eigenstates and Clifford equivalents to Hadamard eigenstates (i.e., states that can be rotated to a Hadamard eigenstate by a Clifford rotation).

In one embodiment, it was found that one way of producing an H-type magic state suitable in at least some instances of GKP-based architectures includes entangling a multi-peak state and a GKP sensor state. Performing a Pauli measurement of at least one of two non-commuting quantum mechanical observables on the entangled state in the quantum system subsequently to the quantum entanglement can generate the H-type magic state. More specifically, the H-type magic state can be generated by performing a Pauli measurement including measuring at least one of two quantum mechanical observables that satisfy the canonical commutation relation on the entangled state. The canonical commutation relation for two operators $\hat{a}$ and $\hat{b}$ is given by $[\hat{a}, \hat{b}] = i\hbar$, where $[\hat{a}, \hat{a}] = [\hat{b}, \hat{b}] = 0$. In one example, the Pauli measurement may be performed by measuring the modular component of a quantum mechanical position or momentum operator (or a linear combination of these), e.g., using optical homodyne detection. In one example, the multi-peak state can be a three-peak state. In one example, the GKP sensor state can be a squeezed GKP sensor state.

In an example measurement-based quantum computation embodiment, the H-type magic state can be used as a non-Clifford resource and entangled with one or more Clifford resources, such as a Pauli eigenstate. Non-Clifford resource states and Clifford resource states may be collectively referred to as resource states. A resource state may be entangled to one or more other resource states, and potentially not only in the spatial domain but also in the time domain, to form a cluster state. Resource states entangled in the spatial domain may be referred to as spatially entangled resource states, and may directly constitute a cluster state. Resource states, or spatially entangled resource states, may then be entangled in the time domain, in which case they may be said to form temporal layers prior to entangling in the time domain. A cluster state may thus alternately be formed by entangling a plurality of temporal layers in the time domain. A Pauli measurement can be applied to the cluster state in a manner to apply a gate. A number of iterations may be performed, including generating a next temporal layer of the cluster state and a next Pauli measurement, and the results of one or more of the previous Pauli measurement(s) can be used to inform the way the next Pauli measurement will be performed, in a manner to apply the gate, and so forth, until the quantum computation is complete.

In an example circuit-based quantum computation embodiment, the H-type magic state can be used as a first quantum subsystem, and operation of a coupler can control the quantum interaction between the first quantum subsystem and a second quantum subsystem (and potentially more quantum subsystems via additional couplers) in order to apply a gate. More than one gate can be applied successively. The result of the application of the gate or gates on the quantum subsystems can be ascertained by measuring the state of the quantum subsystems subsequently to the application of the gate, completing the quantum computation.

In one example, the Pauli measurement can be a homodyne measurement. In one example, the entanglement can be performed by interfering using a beamsplitter. It is possible to generate several H-type magic states.

In an embodiment, the specific H-type magic state to be produced can be controlled by adjusting the relative heights of the peaks in the multi-peak state. For instance, one can aim to produce an output state in the form $\cos(\theta)|0_{GKP}\rangle +$

$$h_0 = \frac{2\cos(\theta)}{\sqrt{3+\cos(2\theta)}}, h_1 = \frac{\sin(\theta)}{\sqrt{3+\cos(2\theta)}}$$

$\sin(\theta)|1_{GKP}\rangle$, and the peak heights can be defined as with values of $\theta = (2n + 1)\pi/8$, $n = 0,1,2,3$ corresponding to different H-type magic states. In one example, only $n = 0$ may be used. Indeed, all other unitaries may be built out of the $n = 0$ H-type magic state and Clifford operations. In other examples $n = 1, 2,$ and/or 3 may also be used, such as to allow performing finer angle rotations (e.g., certain types of non-Clifford operations) in a single step which may be helpful in saving on compilation, and/or may allow a practical way of performing fine-tuning.

In one example, the method for generating GKP magic states can be summarised as follows:

Create a squeezed GKP sensor state and a 3-peak GKP state with different peak heights. With a 3-peak state, modify the relative heights between the centre peak and the outer two. The squeezed GKP sensor state $|\phi\rangle$ has spacing of $2\sqrt{2\pi}$ in both the position and momentum quadratures.

In this example, the process makes use of 3-mode GBS devices and existing GKP state factories. Although the probability of making a successful GBS output is less than 1, once it is generated, an H-type magic state can be produced with reasonably high probability (at least compared with other methods). The probability of having a usable 3-mode GBS output can be boosted by utilizing multiple GBS devices in parallel and multiplexing.

Basic Notation and Definitions

Let $\hat{a}$ and $\hat{a}^{\dagger}$ be the bosonic annihilation and creation operators, respectively. The position operator can then be defined as

$$\hat{q} = \frac{1}{\sqrt{2}}\left(\hat{a} + \hat{a}^{\dagger}\right)$$

and the momentum operator can be defined as

$$\hat{p} = \frac{-i}{\sqrt{2}}\left(\hat{a} - \hat{a}^{\dagger}\right).$$

Note that $\hbar = 1$ has been set. One therefore has $[\hat{q}, \hat{p}] = i$.
The displacement operator is defined as:

$$\widehat{D}(\alpha) = e^{\left(\alpha\hat{a}^{\dagger} - \alpha^{*}\hat{a}\right)},$$

where $\alpha = re^{i\phi}$ with $r \geq 0$ and $\phi \in [0, 2\pi)$.
The pure position and momentum displacement operators, also called the Weyl-Heisenberg displacement operators, are defined as

$$\hat{X}(s) = \widehat{D}\left(\frac{s}{\sqrt{2}}\right) = e^{-is\hat{p}}$$

and

$$\hat{Z}(s) = \widehat{D}\left(\frac{is}{\sqrt{2}}\right) = e^{is\hat{q}},$$

which displace a state by $+s$ in position and $+s$ in momentum, respectively.
The squeezing operator is defined as

$$\hat{S}(z) = e^{\frac{1}{2}\left(z^{*}\hat{a}^{2} - z\hat{a}^{\dagger 2}\right)},$$

where $z = re^{i\phi}$ with $r \geq 0$ and $\phi \in [0, 2\pi)$.
An eigenstate of position is indicated by $|\cdot\rangle_q$ and an eigenstate of momentum is indicated by $|\cdot\rangle_p$, where $\cdot$ represents the position or momentum of the state, respectively. The wave functions of position and momentum eigenstates are Dirac delta functions in position and momentum space, respectively.
Consider a state $|\psi\rangle$. The state's position-space wave function is given by $\psi(s) = {}_q\langle s|\psi\rangle$ while the state's momentum-space wave function is given by $\tilde{\psi}(s) = {}_p\langle s|\psi\rangle$.

GKP Encoding

In the example GKP encoding, the logical basis states are given as $\{|0_{\text{GKP}}\rangle, |1_{\text{GKP}}\rangle\}$, where

$$|0_{\text{GKP}}\rangle = \sum_{n\in\mathbb{Z}}|2n\sqrt{\pi}\rangle_q = \sum_{n\in\mathbb{Z}}|n\sqrt{\pi}\rangle_p$$

and

$$|1_{\text{GKP}}\rangle = \sum_{n\in\mathbb{Z}}\big|(2n+1)\sqrt{\pi}\big\rangle_q = \sum_{n\in\mathbb{Z}}(-1)^n\big|n\sqrt{\pi}\big\rangle_p.$$

In position space, the wave functions of $|0_{\text{GKP}}\rangle$ and $|1_{\text{GKP}}\rangle$ are Dirac combs with a state-dependent offset:

$$\psi_{0,\text{GKP}}(s) = \sum_{n\in\mathbb{Z}}\delta\big(s - 2n\sqrt{\pi}\big),$$

$$\psi_{1,\text{GKP}}(s) = \sum_{n\in\mathbb{Z}}\delta\big(s - (2n+1)\sqrt{\pi}\big).$$

In momentum space, the wave functions of $|0_{\text{GKP}}\rangle$ and $|1_{\text{GKP}}\rangle$ are Dirac combs with a state-dependent phase between spikes:

$$\tilde{\psi}_{0,\text{GKP}}(s) = \frac{1}{\sqrt{2}}\sum_{n\in\mathbb{Z}}\delta\big(s - n\sqrt{\pi}\big),$$

$$\tilde{\psi}_{1,\text{GKP}}(s) = \frac{1}{\sqrt{2}}\sum_{n\in\mathbb{Z}}(-1)^n\delta\big(s - n\sqrt{\pi}\big).$$

One can then implement logical operators $\hat{X}_L$ and $\hat{Z}_L$ via $\sqrt{\pi}$ displacements, i.e., $\hat{X}(\sqrt{\pi})$ and $\hat{Z}(\sqrt{\pi})$, respectively.

Pauli Operators

The three GKP-encoded logical Pauli operators are defined as

$$\hat{\sigma}_x = e^{-i\sqrt{\pi}\hat{p}}$$

$$\hat{\sigma}_z = e^{i\sqrt{\pi}\hat{q}}$$

$$\hat{\sigma}_y = i\hat{\sigma}_x\hat{\sigma}_z.$$

Note that $\hat{\sigma}_x$ is equivalent to a $\sqrt{\pi}$ displacement in position, while $\hat{\sigma}_z$ is equivalent to a $\sqrt{\pi}$ displacement in momentum. Looking at the above definitions for $|0_{\text{GKP}}\rangle$ and $|1_{\text{GKP}}\rangle$, it can be seen that $\hat{\sigma}_x$ is a bit flip, $\hat{\sigma}_z$ is a phase flip, and $\hat{\sigma}_y$ is both a bit and phase flip.

Hadamard Operator and Eigenstates

The Hadamard operator is given by

$$\hat{H} = e^{i\frac{\pi}{2}\hat{n}},$$

where $\hat{n} = \hat{a}^\dagger\hat{a} = \frac{1}{2}(\hat{q}^2 + \hat{p}^2 - 1)$ is the number operator. Note that $\hat{H}$ is equivalent to a $\pi/2$ rotation in phase space. In terms of the logical basis states, $\hat{H}$ maps a logical basis state to a superposition of the two logical basis states:

$$\hat{H}|0_{\text{GKP}}\rangle = \frac{1}{\sqrt{2}}|0_{\text{GKP}}\rangle + \frac{1}{\sqrt{2}}|1_{\text{GKP}}\rangle = |+\rangle$$

$$\hat{H}|1_{\text{GKP}}\rangle = \frac{1}{\sqrt{2}}|0_{\text{GKP}}\rangle - \frac{1}{\sqrt{2}}|1_{\text{GKP}}\rangle = |-\rangle.$$

Eigenstates of $\hat{H}$ are indicated as $|H+\rangle$ (eigenvalue of +1) and $|H-\rangle$ (eigenvalue of -1). Notably, these Hadamard eigenstates are non-Pauli eigenstates and are therefore magic states.

GKP sensor states

A GKP sensor state $|\varnothing\rangle$ is given by

$$|\varnothing\rangle = \sum_{n\in\mathbb{Z}}\left|n\sqrt{2\pi}\right\rangle_q.$$

A state which will be referred to herein as a squeezed GKP sensor state $|\phi\rangle$ is introduced. In an embodiment, the squeezed GKP sensor state can have the form:

$$|\phi\rangle = \sum_{n\in\mathbb{Z}}\left|2n\sqrt{2\pi}\right\rangle_q.$$

Note that the squeezed GKP sensor state has a wider peak spacing in position space by a factor of 2 in this specific example. It will be noted that in different embodiments, other peak spacing may be used by providing suitable compensation, e.g., in the circuit which is used.

Clifford gates

Clifford gates are quantum logic gates that map tensor products of Pauli matrices to tensor products of Pauli matrices. Examples of single-qubit Clifford gates include the Pauli X, Y, and Z gates ($\hat{\sigma}_x$, $\hat{\sigma}_y$, $\hat{\sigma}_z$), the Hadamard gate ($\hat{H}$), and the phase gate ($\sqrt{\hat{\sigma}_z}$). An example of a two-qubit Clifford gate is the CNOT gate. Clifford gates do not form a universal gate set and can be efficiently simulated on a classical computer.

Gaussian boson sampling (GBS)

GBS refers to preparing a multi-mode state and measuring a subset (or all) of the modes in the Fock basis. In the context of preparing states for photonic quantum computing, GBS typically involves preparing a multi-mode state by interfering $N$ squeezed states via a network of beamsplitters and measuring $N$ - 1 modes in the Fock basis with photon-number-resolving detectors (PNRDs). The output of a GBS device is a non-Gaussian state that can be used as a resource for GKP-based quantum computation, where the number of photons detected at each PNRD is indicative of the properties of the non-Gaussian state. While GBS devices can directly produce a number of useful resource states (squeezed cat states, 3-peak states, GKP states, etc.), GBS is non-deterministic. The probability of directly producing high-quality GKP states, for example, is quite low. For this reason, approaches other than direct GKP state generation, such as cat state breeding and amplification, are proposed.

The detailed description below describes in detail a method of generating H-type magic states by interfering a three-peak state with a squeezed GKP sensor state. Note however that a similar approach can be taken with a multi-peak state having a number of peaks different than three instead of a three-peak state, such as a two peak state or a state having 4 or more peaks. One downside to using states having more than three peaks is that generating them may be more difficult (i.e., has a lower probability) than generating three-peak states. In principle, two-peak states, which are easier to produce, can also be used, but they result in a lower probability of generating high-quality GKP magic states. A similar approach may also be taken with a multi-peak state and a squeezed GKP sensor state having a different degree of squeezing.

In the context of the example method presented above, only one high-quality squeezed GKP sensor state is used. While the present invention uses a three-peak state in addition to a squeezed GKP sensor state, three-peak states are much easier to produce compared to a high quality GKP state, and there can be an advantage to using one multi-peak state and one squeezed GKP sensor state rather than two GKP sensor states.

In the context of the example method presented above, the process works on displaced GKP sensor states. Cat state breeding and amplification protocols which may be used for producing GKP states would result in displaced GKP states. The process is thus compatible with cat state breeding and amplification protocols for GKP state production.

In accordance with one aspect, there is provided a method of generating an H-type magic state in a quantum system, the method comprising: generating a Gottesman-Kitaev-Preskill (GKP) sensor state in the quantum system; generating a multi-peak state in the quantum system; generating an entangled state including performing a quantum entanglement between the GKP sensor state and the multi-peak state in the quantum system; and performing a measurement on the entangled state in the quantum system subsequently to said quantum entanglement, thereby generating the H-type magic state, the measurement being a Pauli measurement and including measuring at least one of two quantum mechanical observables satisfying a canonical commutation relation.

It will be noted that this specification concerns the practical, tangible applications of quantum computing. As well known and understood by persons having ordinary skill in the art, in practical quantum computation, observed (measurable) states seldom correspond to the mathematical definition, or to a mathematically perfect expression of such states. A practical state can be said to be a state of a given type when there is sufficient correlation between the features of the practical state and its mathematical definition to allow its use as such in the practical context of quantum computations. Accordingly, in this specification, expressions such as GKP sensor state, H-type magic state, multi-peak state, etc., are not to be interpreted as limited to theoretically (mathematically) perfect instances of such states, and are to be interpreted as including practical approximations to the theoretically perfect instances of such states. In practice, when implementing a quantum system, one can try to make a given state as close as possible to a mathematical definition of such a state, taking into consideration hardware limitations inherent to any practical implementation, but in many cases, as long as the state is close enough to the mathematical definition to be practically useful in performing a quantum computation, it can be deemed suitable for practical purposes and can be understood to constitute a practical expression of the state's definition in a real-world implementation. Indeed, even relatively inefficient quantum computations can be of practical interest in some cases.

Many further features and combinations thereof concerning the present improvements will appear to those skilled in the art following a reading of the instant disclosure.

## DESCRIPTION OF THE FIGURES

In the figures,

Fig. 1 is a view of an example quantum computer;

Fig. 2 is a view of an example quantum computing circuit that generates an H-type magic state from a three-peak state and from a sensor state;

Figs. 3A and 3B are schematic plots of a two-mode wave function in the $q$ representation with, in Fig. 3A, the initial wave function of the product state and, in Fig. 3B, the rotation by an angle generated by the beamsplitter BS($\beta$);

Fig. 4 presents an example full GBS circuit that generates a three-peak state from four vacuum states;

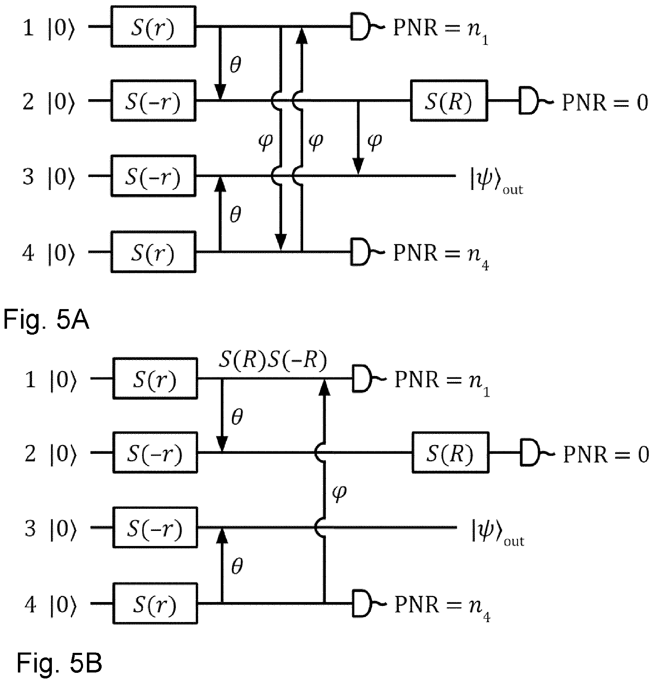

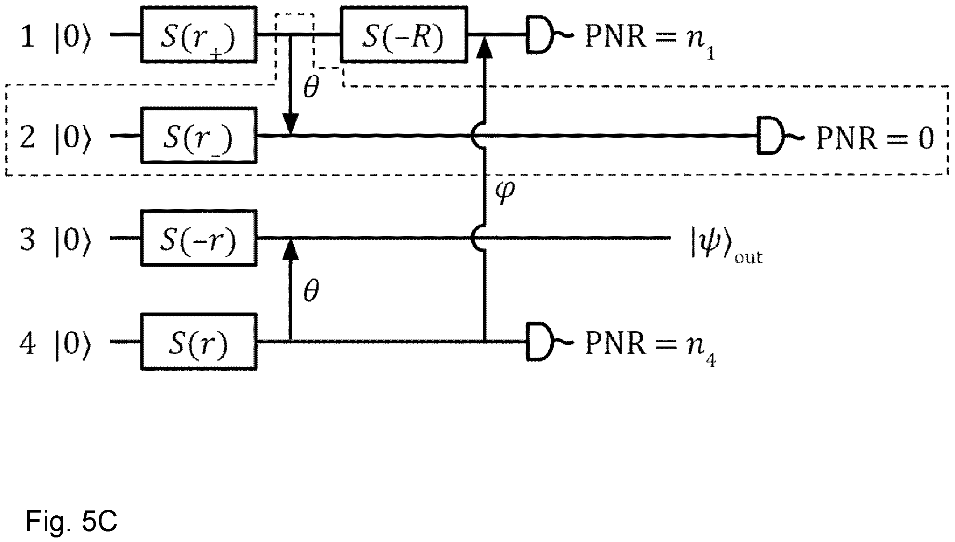

Figs. 5A-5C represent a process for rearranging the GBS circuit that generates a three-peak state from four vacuum states including, at Fig. 5A, applying a beamsplitter with angle $\varphi$ between modes 1 and 4 and its inverse, at Fig. 5B, commuting $BS_{1,4}(\varphi)$ and $BS_{2,3}(\varphi)$ to the left as they act as the identity when applied to equally squeezed states, then applying $\hat{I} = S(R)S(-R)$ to mode 1, and at Fig. 5C, commuting to the left the squeezing operators $S(R)$ applied to modes 1 and 2 through the $BS_{1,2}$ and combining them with the squeezing applied to the vacuum modes;

Fig. 6 is a schematic presenting the reshuffling of the GBS circuit that generates a three-peak state from four vacuum states;

Fig. 7A is an example quantum computing circuit that generates an H-type magic state from a three-peak state and from a sensor state, and Fig. 7B is an associated plot of the Wigner function of the three-peak state;

Fig. 8 presents the figure of merit (FOM) of the magic state generated using the reshuffled GBS circuit as a function of $\xi$ for different values of PNR patterns when post-selecting at $p = 0$ for the homodyne outcome;

Fig. 9 shows plots of the states generated by the GBS (after the squeezing re-scaling) at the top and the generated magic states at the bottom for four different values of $\xi$ for the PNR values [18,18];

Fig. 10A shows the probability $P_{n,m}(\xi)$ of the allowed PNR values as a function of the squeezing parameter $\xi$;

Fig. 10B shows the total success probability $P_s(\xi) = \sum_{(n,m)\in\mathcal{J}} P_{n,m}(\xi)$ (where $\mathcal{J}$ is the set of the allowed outcomes $\mathcal{J} = \{(n,n)|n = 4,5,...,18\}$);

$$P_{n,m}^{\mathrm{rel}}(\xi) = P_{n,m}(\xi)/P_s(\xi)$$

Fig. 10C shows the relative probability of the different PNR outcomes;

Figs. 11A and 11B show the probability distribution of the $p$ homodyne measurement $P^{(n,m)}(p, \xi)$ and the figure of merit $\mathrm{FOM}^{(n,m)}(p, \xi)$, respectively, for the post-selected PNR values $n = m = 18$, and Figs. 11C and 11D show the probability and FOM distributions for $\xi = -1.56$ and $\xi = -1.19$, respectively;

Fig. 12 shows magic states generated for the homodyne outcomes $p = 0$, $\sqrt{\pi}/2$, and $\sqrt{\pi}$;

Fig. 13 is a plot of the FOM averaged over homodyne values;

Fig. 14 is a plot of the FOM averaged over homodyne values and accepted PNR outcomes;

Fig. 15 shows the cumulative distribution of the H-type magic state fidelity;

Fig. 16 is a plot illustrating an example of the encoding of qubit logical states on a continuous-variable physical parameter;

Fig. 17 is a flow chart illustrating an example process of performing a quantum computation using a quantum computer such as shown in Fig. 1;

Fig. 18 shows another example of a quantum computer; and

Fig. 19 shows an example of a classical computer.

## DETAILED DESCRIPTION

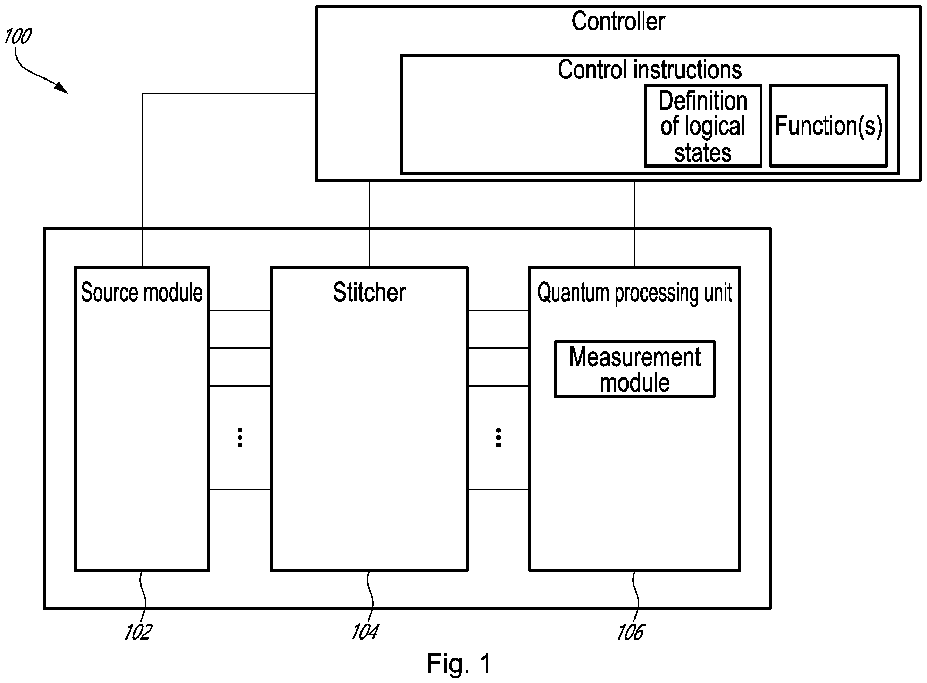

FIG. 1 illustrates a simplified system-level block diagram of an exemplary quantum computer 100 in accordance with the present disclosure. The components of the quantum computer 100, described in more detail below, can be configured to one or more of: create, generate, shape, measure, decode, and error-correct a selected entangled cluster state that serves as a resource for measurement-based fault-tolerant quantum computation. For example, the quantum computer 100 may be a measurement-based quantum computer in the Raussendorf-Harrington-Goyal (RHG) model using continuous-variable (CV) qubits. Although an example is described below in the context of a measurement-based quantum computing model based on a photonic platform, it is understood that embodiments of the methods described herein are also applicable to other quantum platforms, including superconducting qubits, trapped ion qubits, and any other quantum platforms, and may be of use in circuit-based quantum computing models and even potentially in adiabatic quantum computing models.

Before continuing the discussion of FIG. 1, some general aspects of the invention are discussed in the following.

1. According to an aspect, a method of generating an H-type magic state in a quantum system is disclosed, the method comprising:

generating a Gottesman-Kitaev-Preskill (GKP) sensor state in the quantum system;

generating a multi-peak state in the quantum system;

generating an entangled state including performing a quantum entanglement between the GKP sensor state and the multi-peak state in the quantum system; and

performing a measurement on the entangled state in the quantum system subsequently to said quantum entanglement, thereby generating the H-type magic state, the measurement being a Pauli measurement and including measuring at least one of two quantum mechanical observables satisfying a canonical commutation relation.

In various embodiments the GKP sensor state is given by $|\phi\rangle=\Sigma\_n\ 2\sqrt{2\pi}\ n)\_q$ , the multi-peak state is given by $|\psi\rangle=h\_1\ |-\sqrt{\pi}\rangle\_q+h\_0\ |0\rangle\_q+h\_1\ |\sqrt{2\pi}\rangle\_q$, and the H-type magic state is $|H(p)\rangle=h\_0\ |0\_"GKP"\rangle+2h\_1\ \cos(2p\sqrt{\pi})\ |1\_"GKP"\rangle$, where p is an outcome of the Pauli measurement, wherein the H-type magic state is in the form $|H(p)\rangle=\cos(\theta)\ |0\_"GKP"\rangle+\sin(\theta)\ |1\_"GKP"\rangle$ and peak heights of the multi-peak state are, when post-selecting in p=0, $h\_0=(2\cos(\theta))/\sqrt{(3+\cos(2\theta))}$ and $h\_1=(\sin(\theta))/\sqrt{(3+\cos(2\theta))}$, wherein values of $\theta=(2n+1)\pi/8$, where $n\in[0,1,2,3]$.

In various embodiments the GKP sensor state is a squeezed GKP sensor state.

In various embodiments the squeezed GKP sensor state has a peak spacing of $2\sqrt{2\pi}$.

In various embodiments the multi-peak state is a GKP state.

In various embodiments the multi-peak state is a three-peak state.

In various embodiments the multi-peak state is a cat state.

In various embodiments the quantum system is a photonic system, said quantum entanglement is performed using a beam splitter, the Pauli measurement is a homodyne measurement, and the two quantum mechanical observables are position (q) and momentum (p).

In various embodiments said generating a GKP sensor state includes performing a squeezed cat state breeding and amplification process.

In various embodiments the GKP sensor state is a displaced GKP state.

In various embodiments the H-type magic state has a fidelity of at least 0.853 (85.3%).

In various embodiments said generating a GKP sensor state and said generating a multi-peak state are performed using multiple Gaussian Boson Sampling (GBS) devices and multiplexing.

In various embodiments said measurement is a first Pauli measurement, further comprising generating a Pauli eigenstate, generating a cluster state including entangling at least the H-type magic state with the Pauli eigenstate, and applying a gate to the cluster state including performing a second Pauli measurement on the cluster state.

In various embodiments the method further comprises generating a squeezed state, wherein said generating the cluster state further includes entangling the squeezed state with at least the H-type magic state and the Pauli eigenstate.

In various embodiments the method further comprises repeating the steps of generating the cluster state and performing the second Pauli measurement on the cluster state over n iterations, until a quantum computation is completed, wherein said performing the second Pauli measurement of a given one of the n iterations is based on results of the second Pauli measurement of one or more previous ones of the n iterations, in a manner to apply the corresponding gate.

In various embodiments said generating the cluster state at a given one of the n iterations further includes

producing a plurality of spatially entangled resource states,

delaying a subset of the plurality of spatially entangled resource states, and entangling, in the time domain, a subset of the spatially entangled resource states which have not been subject to the delaying with the subset of delayed resource states from a previous one of the n iterations.

In various embodiments said measurement is a first Pauli measurement, further comprising generating a cluster state, entangling the H-type magic state with the cluster state, and applying a gate to the cluster state entangled with the H-type magic state, said applying a gate including performing a second Pauli measurement on the cluster state entangled with the H-type magic state.

In various embodiments the method further comprises repeating the steps of generating the cluster state and performing the second Pauli measurement over n iterations, until a quantum computation is completed, wherein said performing the second Pauli measurement of a given one of the n iterations is based on results of the second Pauli measurement of one or more previous ones of the n iterations, in a manner to apply the corresponding gate.

In various embodiments said generating the cluster state at a given one of the n iterations further includes

producing a plurality of spatially entangled resource states,

delaying a subset of the plurality of spatially entangled resource states, and

entangling, in the time domain, a subset of the spatially entangled resource states which have not been subject to the delaying with the subset of delayed resource states from a previous one of the n iterations.

In various embodiments the H-type magic state is generated in a first quantum subsystem, further comprising generating a Pauli eigenstate in a second quantum subsystem, applying a gate between the first quantum subsystem and the second quantum subsystem including operating a coupler to cause a quantum interaction between the H-type magic state and the Pauli eigenstate, and measuring the state in the first quantum subsystem and in the second quantum subsystem following the quantum interaction.

Returning to the tangible example presented in Fig. 1, in some embodiments, the quantum computer 100 includes a source module 102, a stitcher 104, and a quantum processing unit (QPU) 106. Each of the source module 102, the stitcher 104, and the QPU 106 represents logical functionality that can be implemented exclusively via hardware, exclusively via software, or via a combination of hardware and software. The functional delineation between the separate elements within the quantum computer 100 may only be a conceptual representation of the overall operation of the quantum computer 100.

The source module 102 is configured to generate a plurality of input quantum states. In the case of photonic quantum platforms, the source module 102 may include a plurality of Gaussian Boson Sampling (GBS) sources each configured to generate a continuous-variable (CV) state of light, such as Gottesman-Kitaev-Preskill (GKP) state. Data is mapped onto the generated CV states. Additional details about GKP encoding can be found in "Encoding a Qubit in an Oscillator" by D. Gottesman et al., Physical Review Letters A (64), 012310 (2001), the disclosure of which is incorporated herein by reference in its entirety. In some embodiments, the fidelity of GKP state generation may be boosted by multiplexing the outputs of multiple GBS sources. Additional details regarding GBS source modules can be found, by way of example only, in U.S. Patent No. 11,341,428 by Bourassa et al., entitled "Scalable Photonic Quantum Computing with Hybrid Resource States" [Bourassa], the entire contents of which are incorporated by reference herein for all purposes.

In some embodiments, the source module 102 may include a local pulse train generator. The local pulse train generator is configured to generate a train of local optical pulses that are also referred to as a local oscillator (LO) signal that is operably coupled to elements of quantum computer 100, such as QPU 106, and particularly to the optical detectors (e.g., homodyne detectors) used for projective measurements and for measurement-based quantum computation.

A steady supply of CV states that include both encoded bosonic qubits and squeezed vacuum states may be generated by the source module 102 and sent to the stitcher 104 via a network of optical connections. In some embodiments, the source module 102, the stitcher 104, and the QPU 106 are implemented on photonic integrated circuits (PICs), and the optical network may be implemented using optical fibers compatible with existing optical technologies, which may have a lower level of propagation loss compared to on-chip waveguides. In some embodiments, the source module 102 generates the desired CV states, which may include H-type magic states, by performing Pauli measurements on intermediary CV states within the source module 102. These H-type magic states can then be used as a non-Clifford resource to perform universal quantum computation. In the case of photonic quantum computing architectures, the Pauli measurements may be performed by way of homodyne detection.

The states generated by the source module 102 are provided to the stitcher 104, which is configured to stitch the input states into a lattice structure in accordance with a specific encoding scheme. In some embodiments, the stitcher 104 can interfere these states, such as through a network of static 50:50 beamsplitters with phase delays or reconfigurable beamsplitters into what is referred to as a higher dimensional multimode entangled state, referred to hereinbelow as a cluster state for short, before sending/routing the multimode entangled state to the QPU 106 to be processed. As used herein, "stitching" refers to the creation/imposition of entanglement between the different modes at different lattice sites. In some embodiments, during operation of the quantum computer 100, non-deterministically generated encoded qubits and non-Gaussian states of light can be stitched into a random but known subset of the sites (by virtue of them being generated at a random subset of locations, and not being generated at other locations), while the remaining sites are populated with deterministically generated Gaussian states, such as squeezed vacuum states for example. An indication of whether or not a location is within the subset of the sites is provided. Additional details of higher dimensional multimode entangled states may be found in Bourassa, cited above.

Measurements can be performed on the higher dimensional multimode entangled state by a measurement module 108 of the QPU 106 to provide electric field quadrature information (e.g., the position or amplitude quadrature referred to herein as the "q quadrature" and the momentum or phase quadrature referred to herein as the "$p$ quadrature"). The measurements are performed by one or more optical detectors of the measurement module 108. In some embodiments, the optical detectors are homodyne detectors which can be used to perform measurements on each macronode of the multimode state to reduce each macronode into a single node with multiple edges. The measurement outcomes can be used by the quantum computing system to perform error correction and can also be utilized by the system to perform measurement-based quantum computation (MBQC). The optical detectors, (e.g., homodyne detectors) may be configured to perform quadrature measurements by interfering the optical modes of an input entangled resource state and the train of local optical pulses on a beamsplitter and detecting the optical power difference of the two beam splitter outputs as an indication of the modal property(ies) of the quantum state of the given optical pulse. The measurement outcomes collected on the multimode entangled states (i.e., at the physical hardware layer) can be processed together to implement one or more aspects of an error correction code. The measurement results can be processed by the QPU 106, which may be configured to take, as inputs, the measurement outcomes that have been realized to perform the logical operations.

The control of the at least one of and typically each one of the source module 102, stitcher 104, and quantum processing unit 106 cannot be performed manually and is performed via hardware and software elements which will be referred to herein as a controller. The controller can be a classical computer, i.e., a computer based on bits rather than qubits for computation, including at least one processor wherein control instructions are stored in computer-readable memory and are accessible to the at least one processor. The control instructions can include a plurality of functions, such as a source module control function, a stitcher module control function, and a quantum processing unit control function, each of which can include a plurality of sub-processes. The control instructions typically include a definition of logical states which are mapped to the specific hardware elements of the given embodiment.

Protocols using squeezed cat breeding and amplification can be a powerful tool to generate Pauli GKP states. Using the same phase estimation protocol used to generate Pauli eigenstates may not be possible for the generation of magic states without using non-Clifford gates. However, given that such state factories could produce GKP Pauli eigenstates (hereinafter GKP states) and/or sensor states (hereinafter GKP sensor states), the following protocol is considered to generate magic states: interfere a multi-peak state (e.g., three-peak state) with a squeezed GKP sensor state on a beamsplitter (BS), and by controlling the relative heights of the peaks in the three-peak state, generate one of several types of H-type magic states.

In order to characterize how good a given protocol is to generate magic states, one may define a figure of merit (FOM) for the quality of the state generated. Consider the following FOM:

$$\text{FOM} = \max_{i,j=(x,y,z)} \left| \left\langle \frac{\hat{\sigma}_i \pm \hat{\sigma}_j}{\sqrt{2}} \right\rangle \right| \qquad (2)$$

where $\sigma_j, j = x,y,z$ are the Pauli operators of the GKP encoded qubits corresponding to displacement in phase space. When the operator in (2) is equal to $(\hat{\sigma}_x + \hat{\sigma}_z)/\sqrt{2}$, this corresponds to another representation of the Hadamard operator (i.e., $\hat{H} = (\hat{\sigma}_x + \hat{\sigma}_z)/\sqrt{2}$ also acts as a Hadamard gate when restricted to the GKP subspace). The other operators in (2) for $i \neq j$ are the Clifford equivalents to the Hadamard gate. This FOM has the advantage of taking into account all Clifford equivalent states and also attains its maximum value in the GKP encoded space. Also, for a given mean value of a Pauli operator, and given that $\hat{\sigma}_x = e^{-i\sqrt{\pi}\hat{p}}$, $\hat{\sigma}_z = e^{i\sqrt{\pi}\hat{q}}$ and $\hat{\sigma}_y = i\hat{\sigma}_x\hat{\sigma}_z$, if $\langle\hat{\sigma}_x\rangle = X$ over a state $|\psi\rangle$ then $\langle\hat{\sigma}_x\rangle = Xe^{-i\sqrt{\pi}t}$ over the state $e^{it\hat{q}}|\psi\rangle$ (where $e^A e^B = e^B e^A e^{[A,B]}$ was used), and similarly for the mean values of the rest of the Pauli operators. Therefore, any phase of the mean values of the Pauli operators can be compensated by displacing the state by the correct amount. That is, this figure of merit is insensitive to whether the magic state is displaced in phase space; this is valuable because known displacements on the state do not affect their utility in the cluster state architecture, as the displacement can be compensated for in software via an update to the measured homodyne values on the cluster state. For that reason, the FOM used herein will be

$$\text{FOM} = \max_{i,j=(x,y,z)} \frac{|\langle\hat{\sigma}_i\rangle| + |\langle\hat{\sigma}_j\rangle|}{\sqrt{2}} . \qquad (3)$$

The mean value of the GKP code stabilizers $\hat{S}_p = \hat{\sigma}_x^2 = e^{-i2\sqrt{\pi}\hat{p}}$ and $\hat{S}_q = \hat{\sigma}_z^2 = e^{-i2\sqrt{\pi}\hat{q}}$ can be used, despite not being observables, as a way to quantify how well a given state approximates an ideal GKP state.

Magic state generation protocols

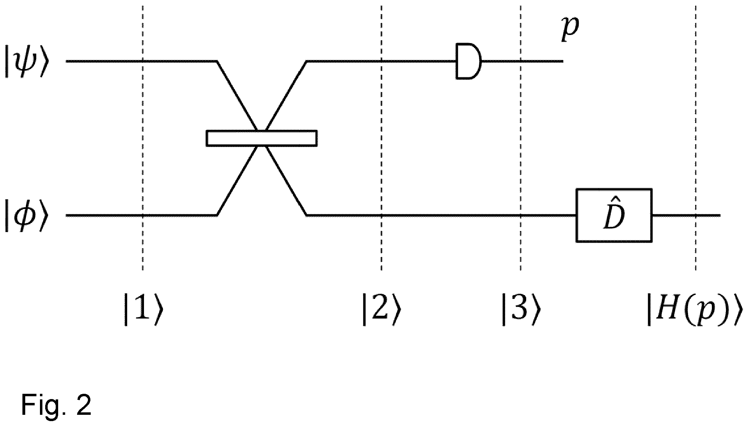

In the specific example embodiment presented in Fig. 2 the squeezed GKP sensor state $|\phi\rangle$ and the input three-peak state $|\psi\rangle$ are given by

$$|\phi\rangle = \sum_n \left| 2\sqrt{2\pi}n \right\rangle_q , \qquad (4)$$

$$|\psi\rangle = h_1 \left| -\sqrt{2\pi} \right\rangle_q + h_0 |0\rangle_q + h_1 \left| \sqrt{2\pi} \right\rangle_q . \qquad (5)$$

The squeezed GKP sensor state can be a state for which spacing in the q quadrature has been modified to

$2\sqrt{2\pi}$, i.e., double the non-squeezed GKP sensor state.

After the corrective displacement $\widehat{D}(-ip/\sqrt{2})$, where $p$ is the outcome of the homodyne measurement the, output state $|H(p)\rangle$ is

$$|H(p)\rangle = h_0|0_{\mathrm{GKP}}\rangle + 2h_1\cos\left(2p\sqrt{\pi}\right)|1_{\mathrm{GKP}}\rangle .\quad (6)$$

To target an output state of the form $\cos(\theta)\,|0_{\mathrm{GKP}}\rangle + \sin(\theta)\,|1_{\mathrm{GKP}}\rangle$, the peak heights of the three-peak input state can be selected to be (when post-selecting in $p = 0$)

$$h_0 = \frac{2\cos(\theta)}{\sqrt{3+\cos(2\theta)}} \quad h_1 = \frac{\sin(\theta)}{\sqrt{3+\cos(2\theta)}} .\quad (7)$$

Values of $\theta = (2n + 1)\pi/8, n = 0,1, 2, 3$ correspond to different H-type magic states.

It will be noted here that the corrective displacement is optional. For instance, in an alternate embodiment, one could shift the binnings of $|0_{\mathrm{GKP}}\rangle$ and $|1_{\mathrm{GKP}}\rangle$ to account for the displacement.

Generation of three-peak states

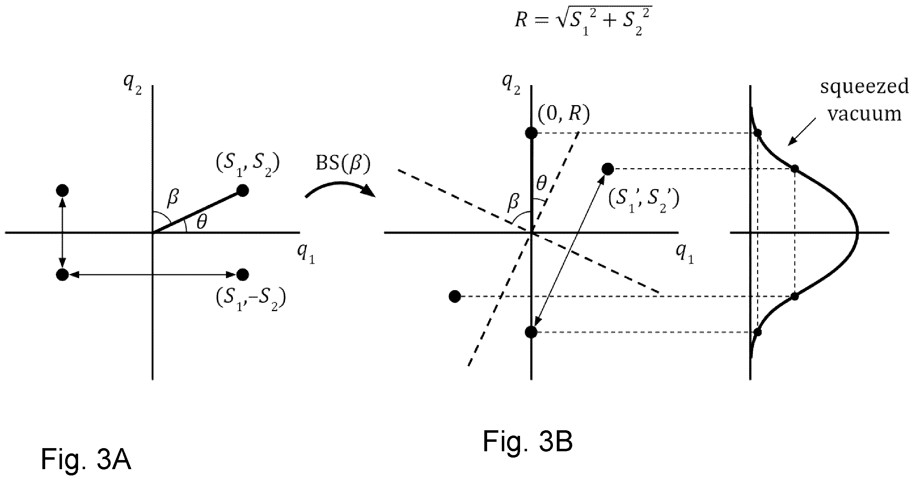

By interfering two squeezed cat states on a beamsplitter and then projecting onto a squeezed vacuum state one can generate a three-peak state. By tuning the squeezing level of the squeezed vacuum state onto which one is projecting, one can adjust the relative heights between the inner and outer peaks in the three-peak output state, as needed for the protocol in Fig. 2. This is shown schematically in the q-q diagram in Figs. 3A and 3B.

One option for producing approximate versions of the input squeezed cat states is by using a two-mode GBS with a beamsplitter angle $\theta$ set to the monomial condition, meaning the wavefunction of the output state is the product of a monomial and a Gaussian function: $\phi(x) \propto x^n e^{-x^2/2\sigma^2}$. The angle for the monomial condition is given by

$$\cos^2\theta = \frac{1-e^{-2r}}{2\cosh(2r)} \quad \text{or} \quad \theta = \arccos\sqrt{\frac{1-e^{-2r}}{2\cosh(2r)}} ,\quad (8)$$

where $\sigma^2 = \mathrm{sech}(2r)$ and $r$ is the squeezing parameter of the input squeezed states.

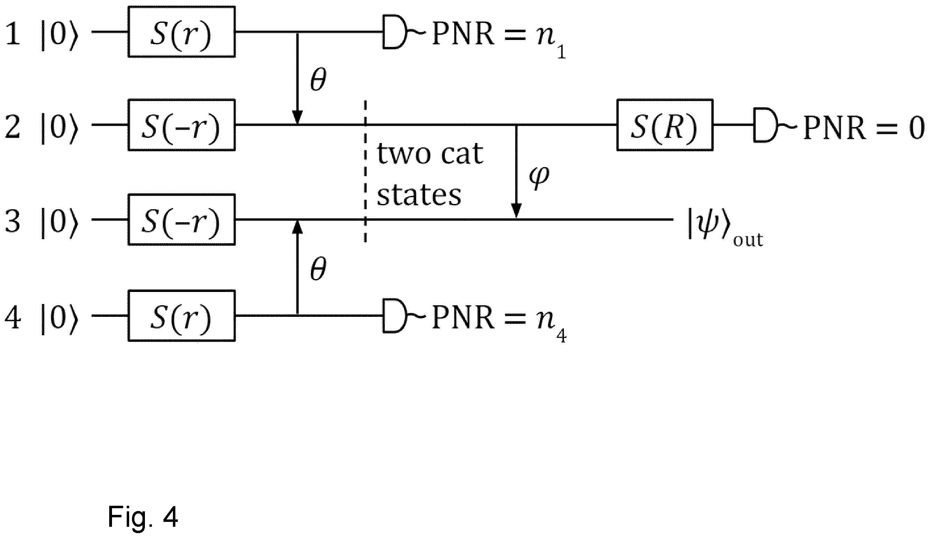

The full circuit that generates the three-peak state from four vacuum states is shown in Fig. 4. If $n_1 = n_4$, i.e., if the generated cat states have the same spacing, then $\varphi = \pi/4$. Otherwise, one could either apply a squeezing operator to get to the same spacing on both cat states or adapt the beamsplitter angle $\varphi = \arctan(s_1/s_2)$ where $s_{1,2}$ are the spacings of the cat states. This circuit can be "reshuffled" to write an equivalent 3-mode GBS in the way shown in Figs. 5A, 5B, and 5C.

Here, one can define $r_{\pm} = R \pm r$. The part of the circuit in the box in Fig. 5C can be rewritten as an operator $\hat{O}_1$ acting on mode 1. This operator is given by (up to a proportionality constant):

$$\hat{O}_1 \propto {}_2\langle 0|B_\theta^{12}S(r_-)|0\rangle_2 \propto$$

$$\int dx\, e^{-x^2/2}\,{}_{q_2}\langle x|B_\theta^{12} \int ds|s\rangle_{q_1}\,{}_{q_1}\langle s| \int dy\, e^{-e^{2r}-y^2/2}\,|y\rangle_{q_2} \quad (9)$$

$$= \int dxdyds\, e^{-x^2/2-e^{2r}-y^2/2}\,{}_{q_2}\langle x|s\cos\theta - y\sin\theta\rangle_{q_1}|y\cos\theta + s\sin\theta\rangle_{q_2}\,{}_{q_1}\langle s| \quad (10)$$

$$\hat{O}_1 = \int dyds\, \exp\left[-\frac{1}{2}(y\cos\theta + s\sin\theta)^2 - \frac{1}{2}e^{2r}y^2\right]|s\cos\theta - y\sin\theta\rangle_{q_1}\,{}_{q_1}\langle s|. \quad (11)$$

Applying the operator $\hat{O}$ to mode 1 in between the two squeezing operators results in:

$$S(-R)\hat{O}S(r_+)|0\rangle \propto S(-R)\hat{O}\int dx\,\exp(-e^{2r_+}x^2/2)\,|x\rangle_q \qquad (12)$$

$$= S(-R)\int dx\,dy\,\exp\left[-\frac{1}{2}(y\cos\theta + x\sin\theta)^2 - \frac{1}{2}e^{2r_-}y^2 - \frac{1}{2}e^{2r_+}x^2\right]|x\cos\theta -$$

$$y\sin\theta\rangle_q \quad (13)$$

$$S(-R)\int dz\left\{\int dt\,\exp\left[-\frac{1}{2}t^2 - \frac{e^{2r_-}}{2}(t\cos\theta - z\sin\theta)^2 - \frac{e^{2r_+}}{2}(z\cos\theta -\right.\right.$$

$$\left.\left. t\sin\theta)^2\right]\right\}|z\rangle_q, (14)$$

where in the second line above the transformation

$$z = x\cos\theta - y\sin\theta \quad x = z\cos\theta + t\sin\theta \qquad (15)$$

$$t = x\sin\theta + y\cos\theta \quad y = -z\sin\theta + t\cos\theta \qquad (16)$$

was used. The integral in curly brackets above proportional to

$$\propto \exp\left[-\frac{z^2}{4}\frac{(\cos(2\theta)(e^{2r_+}-e^{2r_-})+e^{2r_+}(2e^{2r_-}+1)+e^{2r_-})}{e^{2r}-\cos^2\theta+e^{2r_+}\sin^2\theta+1}\right] \qquad (17)$$

$$= \exp\left[-\frac{z^2}{2}\left(\frac{e^{2R}+e^{-2r}+2\cos^2\theta\sinh(2r)}{e^{-2r}\cos^2\theta+e^{2r}\sin^2\theta+e^{-2R}}\right)\right]. \qquad (18)$$

Putting everything together results in:

$$S(-R)\hat{O}S(r_+)|0\rangle \propto \int dz\,\exp\left[\frac{z^2 e^{-2R}}{2}\left(\frac{e^{2R}+e^{-2r}+2\cos^2\theta\sinh(2r)}{e^{-2r}\cos^2\theta+e^{2r}\sin^2\theta+e^{2R}}\right)\right]|z\rangle_q \propto$$

$$S(\xi)|0\rangle \quad (19)$$

$$e^{2\xi} = \frac{e^{-2R}\left(e^{2R}+e^{-2r}+2\cos^2\theta\sinh(2r)\right)}{e^{-2r}\cos^2\theta+e^{2r}\sin^2\theta+e^{-2R}}. \qquad (20)$$

Using the three-peak state to generate magic states (with post-selection)

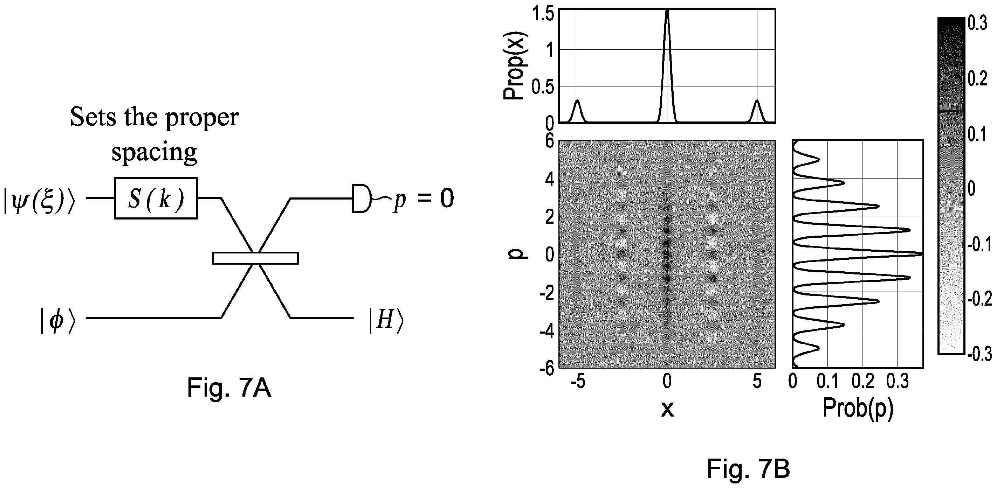

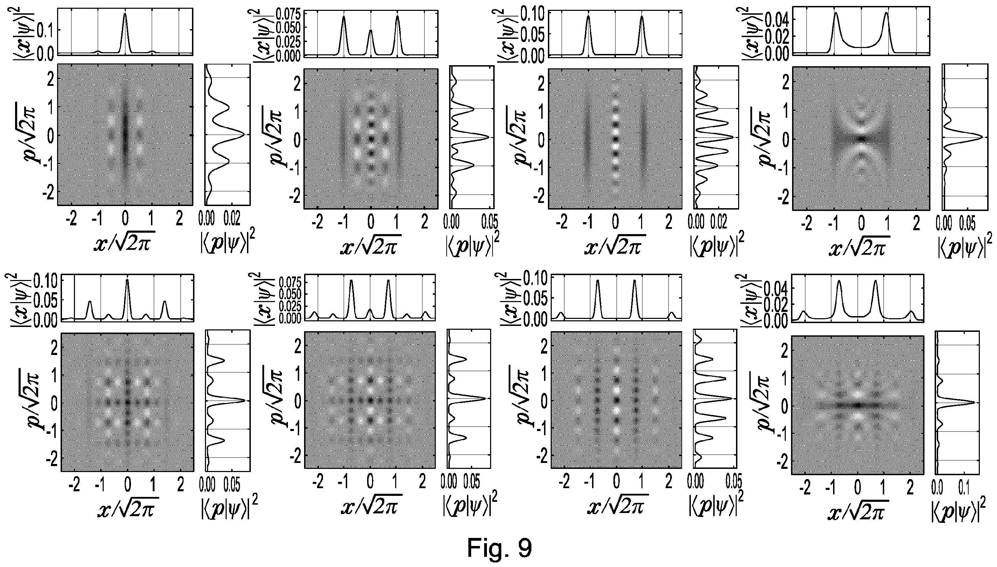

Using this equivalent circuit, one can take the output state and apply a squeezing operator in order to have the correct $\sqrt{2\pi}$ spacing between the peaks. For the squeezed cat states generated at the monomial condition the spacing between the peaks is $s' = 2\sigma\frac{n_1 n_2}{n_1+n_2}$. Therefore, the corrective squeezing operator to be applied is $\hat{S}(k)$ with $k = \ln\left(\frac{\sqrt{2\pi}}{s'}\right)$ (see Figs. 7A and 7B). Given that the equivalence with the reshuffled circuit only holds for $\xi \leq 0$, the spacing between peaks is correct only in that case. Nonetheless, given that there is not a direct way to calculate this spacing for $\xi > 0$, the same value will be used, which will result in sub-optimal magic state generation. However, the states generated by the GBS for those values of $\xi$ are not good approximations of a three-peak state (see the top left plot of Fig. 9) and therefore they would have a sub-optimal performance anyways.

In the following analysis the sensor state used to interfere with the three-peak GBS output state will be a finite-energy GKP with 12dB of squeezing (Wigner function of the three-peak state shown in Fig. 7B). The value of the squeezing parameter r at the input of the GBS is also set to 12dB while the value of $\xi$ is varied between -2.2 and 2.2 (-19 to 19dB).

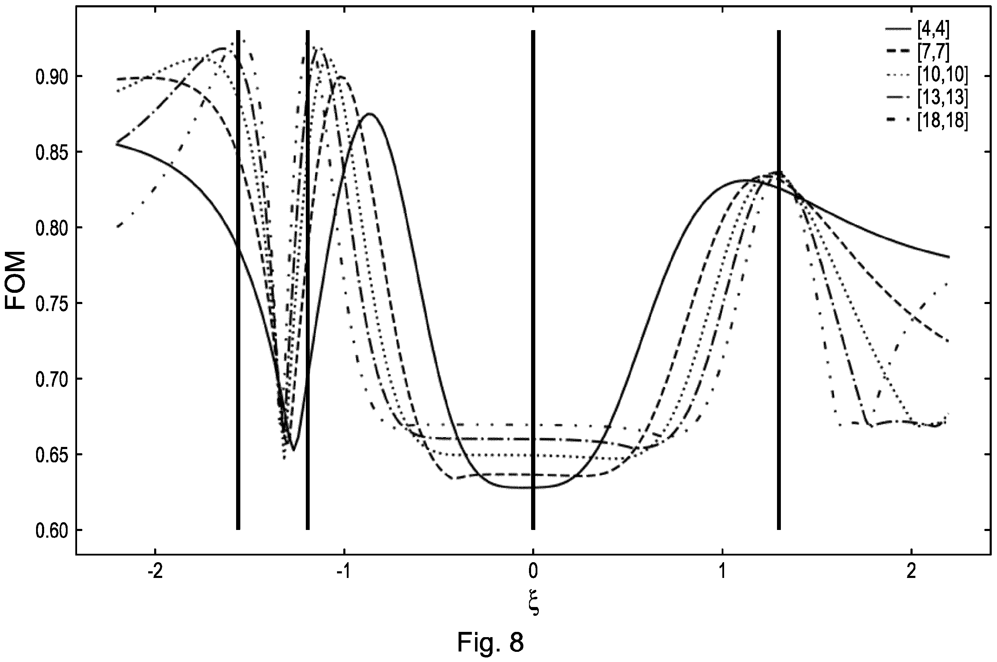

Fig. 8 shows the FOM of the magic state generated using the reshuffled circuit as a function of $\xi$ for different values of PNR patterns when post-selecting at $p = 0$ for the homodyne outcome. For the values of $\xi$ shown in the plot, four different regions can be distinguished which correspond to the regions around the four vertical lines marked in the plot. The highest peaks for negative values of $\xi$ correspond to two different types of magic states (see Fig. 9, bottom, first two from the left). The maxima for each PNR outcome correspond to values of $\xi$ such that the three-peak state generated for the GBS has the correct relative peak height as per Eq. (7) (see Fig. 9, top, first two from the left).

Fig. 9 shows the states generated by the GBS (after the squeezing re-scaling) at the top and the generated magic states at the bottom for four different values of $\xi$ (marked by the vertical lines in Fig. 8, corresponding to the local maxima and $\xi = 0$) for the PNR values [18,18]. The leftmost state approximates very well an $|H+\rangle$ state, where $|H\pm\rangle$ corresponds to an eigenstate of the Hadamard gate $\hat{H}$ with eigenvalue $\pm 1$. The next state approximates very well an $\hat{X}|H+\rangle$ state. For $\xi = 0$ the reshuffled circuit is equivalent to an amplification circuit and therefore at the end of the protocol a Pauli eigenstate (an approximate $|1_{GKP}\rangle$ state) is generated. For the last value of $\xi$ the state generated by the GBS does not have well defined and separated peaks and the magic state that it produces does not have very good quality. This is because for positive $\xi$ the three-mode GBS does not correspond to a reshuffled 4 mode GBS for any value of R.

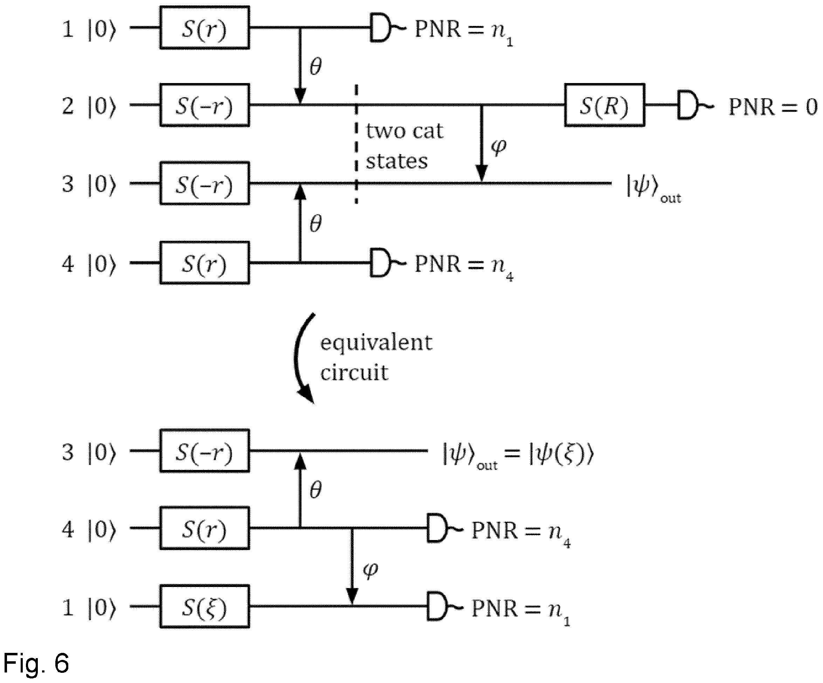

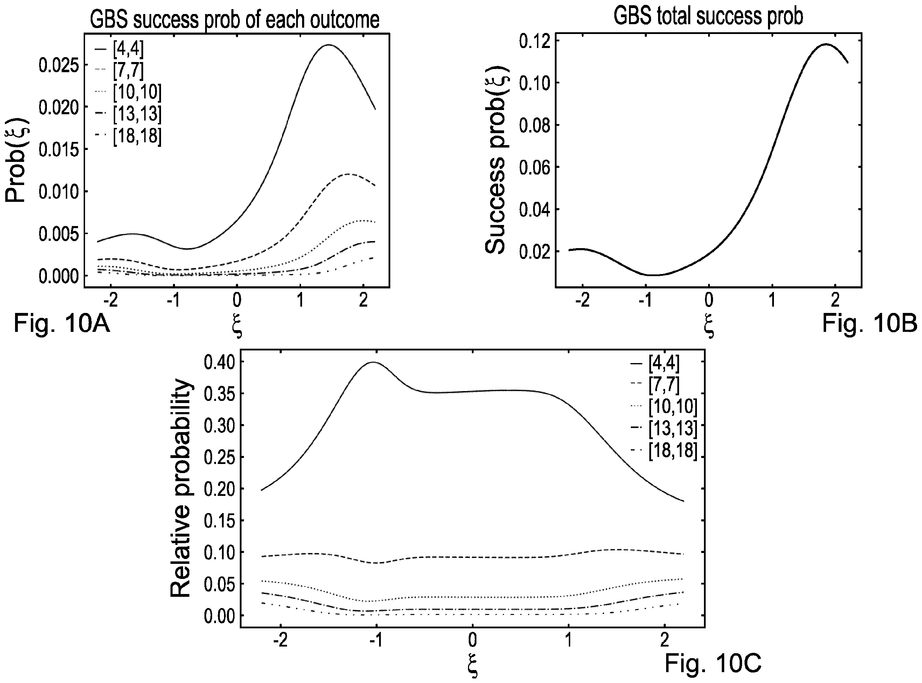

In the reshuffled GBS (Fig. 6) the value of $\varphi = \pi/4$ was set because this is the value needed for breeding two two-peak states with equal peak spacing. For this reason, only PNR values of the GBS with equal photon numbers were selected. One can define that the allowed patterns for the PNR outcomes will be $[n_1,n_4] = [n,n]$ with $n = 4,5,...,18$. Fig. 10A shows the probability $P_{n,m}(\xi)$ of the allowed PNR values as a function of the squeezing parameter $\xi$. Fig. 10B shows the total success probability $P_s(\xi) = \sum_{(n,m)\in\mathcal{J}} P_{n,m}(\xi)$ (where $\mathcal{J}$ is the set of the allowed outcomes $\mathcal{J} = \{(n,n)|n = 4,5,..., 18\}$), that is, the probability of having any of the allowed outcomes for the PNR measurement of the GBS. Unfortunately, the success probability tends to be higher for positive values of $\xi$ which is the region where no three-peak state is generated.

Fig. 10C shows the relative probability $P_{n,m}^{\text{rel}}(\xi) = P_{n,m}(\xi)/P_s(\xi)$ of the different PNR outcomes; that is, the fraction of the times that result in a given pair of allowed PNR values from the set of all allowed outcomes.

Up to this point, the analysis has been done by post-selecting the homodyne measurement in the circuit from Fig. 7A at the $p = 0$ outcome. The following will illustrate the effect on the generated magic state when other values of the homodyne measurement are allowed.

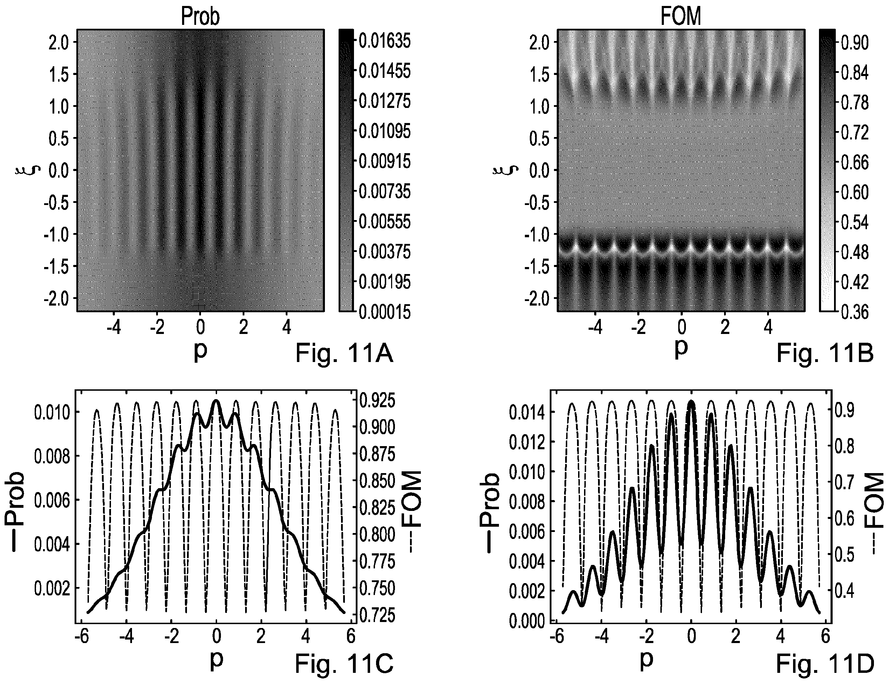

Fig. 11A shows the probability distribution of the $p$ homodyne measurement $P^{(n,m)}(p,\xi)$ for the post-selected PNR values $n = m = 18$ (that is, the probability density of $p$ for the GBS output post-selected state parameterized by the squeezing value $\xi$, meaning the probability density satisfies $\int P^{(n,m)}(p,\xi)dp = 1 \forall (n, m) \in \mathbb{N}, \xi \in \mathbb{R}$). Fig. 11B shows the figure of merit FOM$^{(n,m)}(p, \xi)$ for the same PNR outcome. Figs. 11C and 11D show the probability and FOM distributions for $\xi = -1.56$ and $\xi = -1.19$, respectively, which are the values of $\xi$ that correspond to the highest maxima in Fig. 8. One can see the oscillation of the figure of merit as a function of $p$ and how every local maximum on the $p$ distribution coincides with a maximum of the FOM. These maxima are located at integer multiples of $\sqrt{\pi}/2$. It is a desirable feature that regions of high probability coincide with higher quality output states.

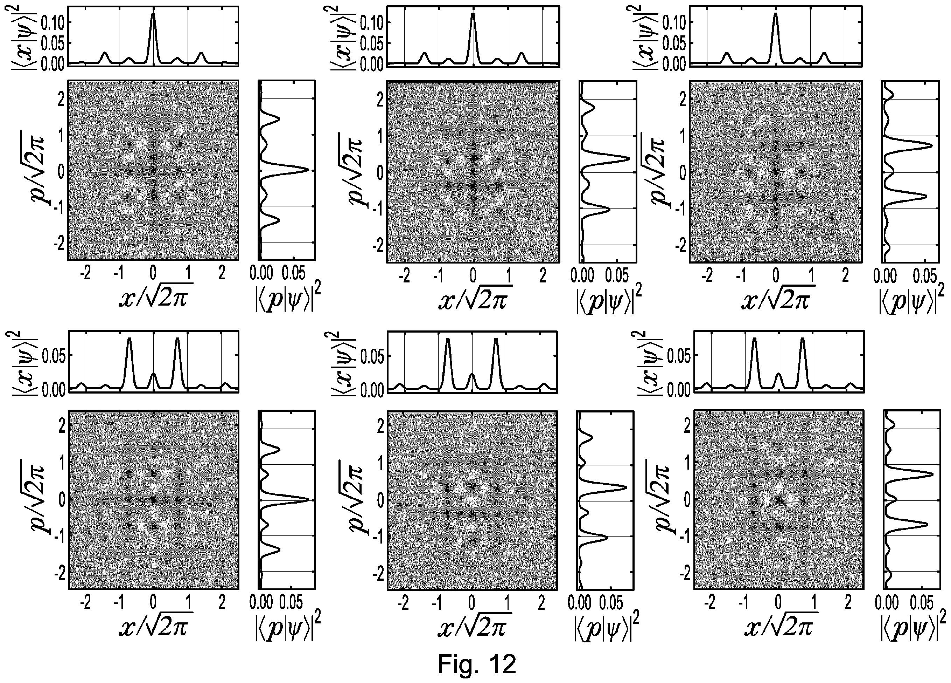

Fig. 12 shows magic states generated for the homodyne outcomes $p = 0$ (left), $p = \sqrt{\pi}/2$ (middle), and $p = \sqrt{\pi}$ (right), which correspond to the middle peak of the FOM plots (Figs. 11B-11D) and the next two peaks to the right. The plots in Fig. 12 also correspond to peaks in the probability distribution: $\xi = -1.56$ (top) and $\xi = -1.19$ (bottom). As illustrated by these plots, different homodyne outcomes generate different types of magic states. $p = 0$ generates an $|H+\rangle$ state for $\xi = -1.56$ and an $\hat{X}|H+\rangle = \hat{Z}|H-\rangle$ state for $\xi = -1.19$, consistent with Fig. 9. However, $p = \sqrt{\pi}$ generates a $\hat{Z}|H+\rangle = \hat{X}|H-\rangle$ state for $\xi = -1.56$ and an $|H-\rangle$ state for $\xi = -1.19$. The $p = \sqrt{\pi}/2$ states correspond either to a down-shifted (in phase space) $p = 0$ state or an up-shifted $p = \sqrt{\pi}$ state. For $p = 2\sqrt{\pi}$ the states are the same as for $p = \sqrt{\pi}$.

Having calculated the FOM for different squeezing parameters and for different homodyne outcomes, together with the probability density $P^{(n,m)}(p, \xi)$, one can calculate the average FOM over the homodyne measurements for every value of the squeezing parameter and for a given PNR outcome as:

$$\text{FOM}_{\text{ave}}^{(n,m)}(\xi) = \int P^{(n,m)}(p,\xi)\text{FOM}^{(n,m)}(p,\xi)dp, \qquad (21)$$

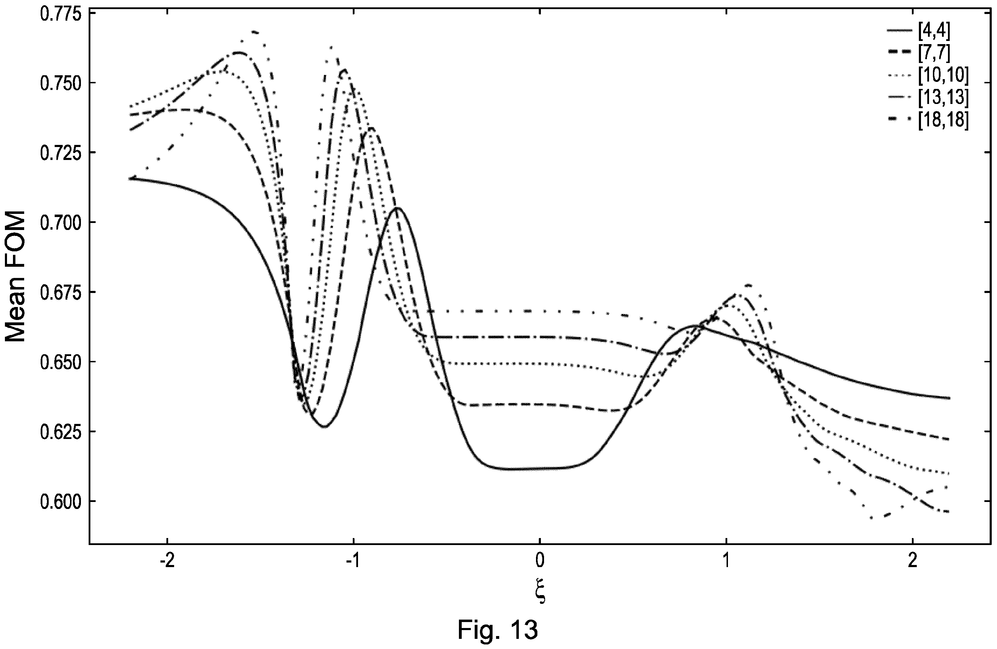

which represents the average FOM when all outcomes of the homodyne detection are accepted. Fig. 13 shows a plot of the average FOM for the allowed PNR values as a function of $\xi$. This plot shows a similar behavior to Fig. 8 but is shifted down to lower values. This is because, as shown in Figs. 11C and 11D, for some values of $p$, the FOM is lower than for $p = 0$ (which is the maximum value attained by the FOM).

Finally, the quality of the generated magic states for every circuit parameterized by $\xi$ can be assessed by calculating the figure of merit averaged over the homodyne values and over the relative probability of the accepted PNR values:

$$\mathrm{FOM}_{\mathrm{mean}}(\xi) = \sum_{(n,m)\in\mathcal{J}} \mathrm{FOM}_{\mathrm{ave}}^{(n,m)}(\xi) P_{n,m}^{\mathrm{rel}}(\xi). \quad (22)$$

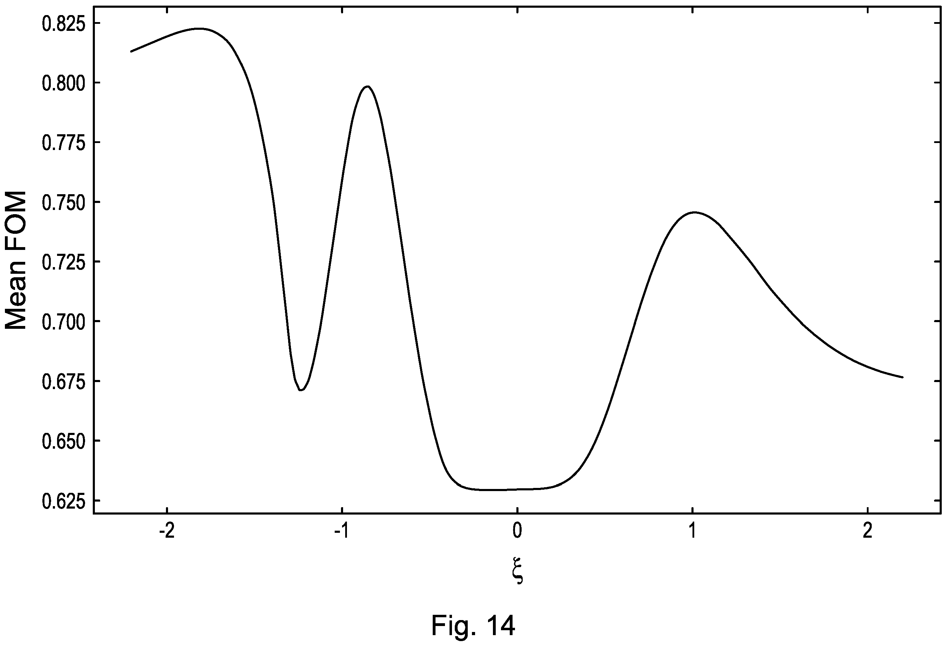

This plot is shown in Fig. 14 which, together with Fig. 10A, indicates the performance of the circuit used to generate magic states. Fig. 14 shows the average quality of the generated magic states (when post-selecting on the allowed PNR values) and Fig. 10A shows the probability of success of the given circuit parameterized by the squeezing value $\xi$.

The two highest maxima around $\xi \approx$ -1.7 and $\xi \approx$ -0.8 correspond to the two maxima in Fig. 13 for each allowed PNR pattern but, as opposed to Fig. 13 where the two maxima have approximately the same value, here the $\xi \approx$ -1.7 peak is higher than the $\xi \approx$ -0.8 peak. This is simply because at $\xi \approx$ -1.7 the contribution of the higher PNR values, which also have a higher FOM, is bigger in comparison to $\xi \approx$ -0.8, as can be seen in Fig. 10C.

Magic Qubit Fidelities

Given the state of an optical mode that is supposed to encode a qubit, one can imagine performing perfect error correction on that state. Perfect error correction will project the optical mode into a perfectly encoded qubit state. Which qubit state is obtained and with what probability depends on the input mode's state and the two quadrature measurement outcomes that serve as error syndromes during the error correction. If the input mode's state is pure, the output qubit state will also be pure given the quadrature measurements. Thus, one can quantify the quality of any given input mode state that is supposed to encode a qubit state by computing the fidelity between the state obtained after perfect error correction and the desired qubit state. Because the output state is random, it may be desirable to know the probability of obtaining a qubit state with a high fidelity to the desired state, and to this end one can plot cumulative distribution functions of fidelity.

As well understood by persons having ordinary skill in the art, in any real GKP quantum computer, the error correction must be imperfect because the helper modes must have finite energy and various other error sources will be present. It can be presumed that the fidelities of encoded qubits obtained after perfect error correction of an input mode will upper bound the performance of that mode's state in a real GKP quantum computer. However, the sense in which "performance" is upper bounded is not yet clear because the fidelity of a qubit that is imperfectly encoded in a mode is not completely understood. Nevertheless, the qubit fidelity obtained after perfect error correction provides a quantification of how well a mode's state represents a qubit state. The precise relationship between this fidelity and the figure of merit in Eq. (3) is an open problem.

The procedure for computing the qubit fidelity of a mode can involve calculating the Wigner function of the mode and then displacing the Wigner function according to the syndrome quadrature measurements. One then computes the overlap integral of the mode's displaced Wigner function with the Wigner functions of the three GKP-Pauli states and a fourth Wigner function that projects onto the GKP code space. These integrals give the three Bloch vector components of the resulting qubit state and the probability of obtaining that qubit state. The Bloch vector components allow one to calculate fidelity to any qubit state. As discussed above, of interest is the fidelity of the resulting qubit to the closest state that can be rotated to the Hadamard eigenstate with +1 eigenvalue by Clifford rotations, which is referred to as an "H-type state." Fidelity to an H-type state is calculated with the formula in Eq. (3), though here the Pauli expectation values are understood as Bloch vector components of the perfectly encoded qubit state. Accordingly, in an embodiment, a state can be considered to be an H-type state if its fidelity to H-type magic states is of at least 0.853.

In the following, 3-peak states' ability to produce H-type magic states is presented. In particular,

$$|3\,\mathrm{peak}\rangle = h_1\left|-\sqrt{\pi}\right\rangle_{\mathrm{sq}} + h_0|0\rangle_{\mathrm{sq}} + h_1\left|\sqrt{\pi}\right\rangle_{\mathrm{sq}} \quad (26)$$

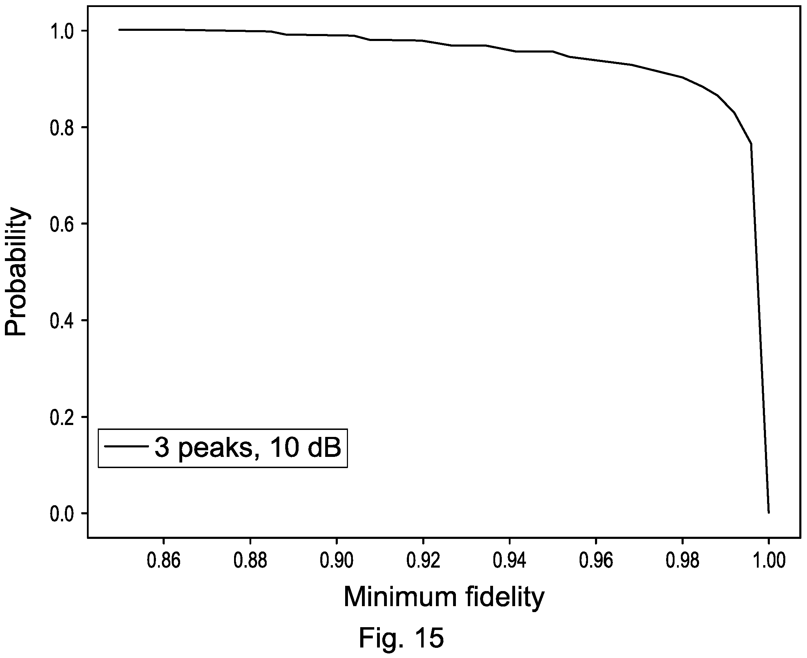

was studied, where $|x\rangle_{\mathrm{sq}}$ is a displaced squeezed state with mean q-quadrature value x, mean p-quadrature value 0, and squeezing of 10 dB. The coefficients $h_0$ and $h_1$ are given in Eq. (7) with $\theta = \pi/8$. The quadrature spacing here is different from that in Eq. (5) because the spacing of that state is expanded to compensate for the action of the beamsplitter in Fig. 2. Fig. 15 shows the cumulative distribution of the H-type magic state fidelity for $|3\,\mathrm{peak}\rangle$. Increased squeezing of the Gaussian peaks increases fidelity. Preliminary calculations have shown that increasing the number of peaks in the state would also increase fidelity of the qubit, but it is expected that creating states with more than three peaks using a Gaussian boson sampler (or any other device) will be difficult.

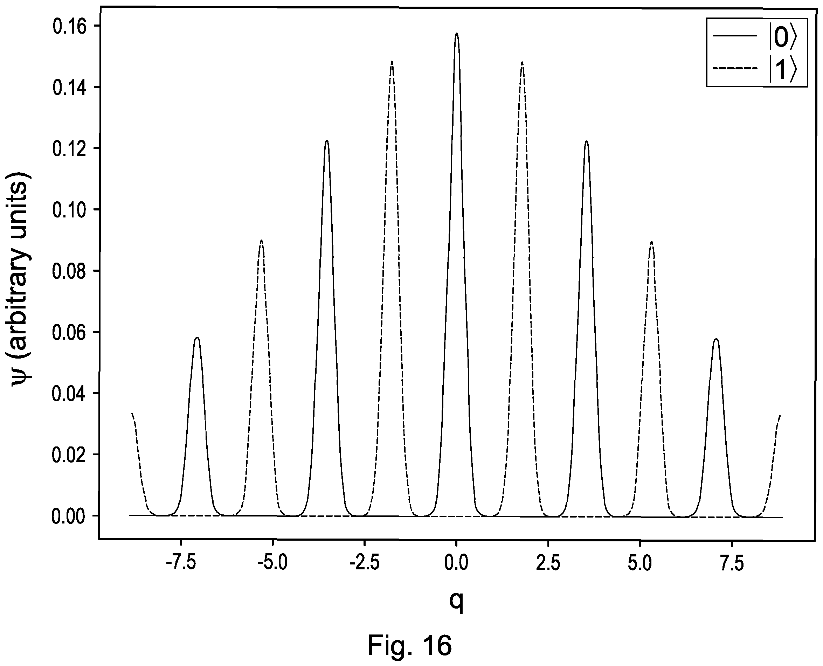

Fig. 16 presents an example of how qubit logic states $|0\rangle$ and $|1\rangle$ can be encoded on continuous variable parameters of a quantum system using the GKP encoding scheme.

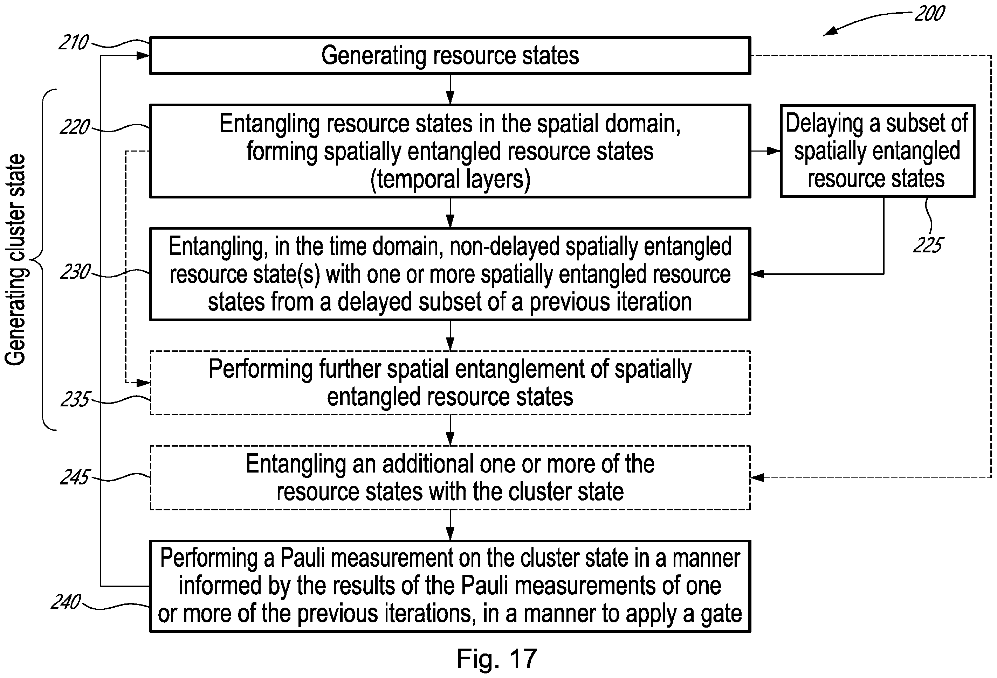

It will be understood that in accordance with one embodiment, H-type magic states as presented above can be useful in the context of a quantum computer operating on the basis of measurement-based quantum computation, such as, for instance, quantum computer 100 shown in Fig. 1. A flow chart presenting an example process 200 of performing a quantum computation in the context of a quantum computer operating on the basis of measurement-based quantum computation is presented in Fig. 17.

Referring to Fig. 17, a first step of the process 200 involves generating 210 resource states. Various resource states may be generated. Resource states may include one or more Pauli eigenstate and one or more H-type magic state. In the case of generating an H-type magic state as a resource state, the step of generating 210 resource states can involve, such as detailed above, forming a GKP sensor state and a multi-peak state in a quantum system forming part of source module 102. The step of generating 210 a resource state can include performing a quantum entanglement between the GKP sensor state and the multi-peak state in the quantum system, and more specifically in the source module 102. A Pauli measurement on the entangled state can be performed by measuring at least one of two quantum mechanical observables that satisfy a canonical commutation relation, thereby generating the H-type magic state forming a non-Clifford resource, which can be referred to as a resource state in this example. The step of generating 210 resource states may also include generating one or more Clifford resources, such as a Pauli eigenstate, in the source module 102, and such one or more Clifford resources may also be referred to as resource states. A plurality of resource states may be built simultaneously.

Resource states may further include one or more squeezed states. Light can be said to be in a squeezed state when its electric field strength for some phases has a quantum uncertainty smaller than that of a coherent state. Indeed, in some cases, if generating a Pauli eigenstate is unsuccessful, a squeezed state may be used in its stead, and be treated as a known error, and the quantum processing process may be resilient to a certain amount of known errors.

A second step of the process 200 involves entangling 220 some of the resource states in the spatial domain to form temporal layers. In an embodiment, one or more Clifford resources and the non-Clifford resource can be entangled 220 to one another by the stitcher 104, producing states which may be referred to herein as spatially entangled resource states. A plurality of spatially entangled resource states may be built simultaneously and may be referred to as a temporal layer. In an embodiment, a first subset of spatially entangled resource states in a temporal layer may comprise only Clifford resources, while a second subset of spatially entangled resource states in the temporal layer may comprise a Clifford resource and a non-Clifford resource.

A subset of the spatially entangled resource states in a temporal layer may be delayed at 225, such as by being directed to a delay line (typically consisting of optical fiber), forming a delayed subset of spatially entangled resource states. One (or more) other subsets of the spatially entangled resource states in the temporal layer may not be delayed, and may be referred to as a non-delayed subset of spatially entangled resource states.

A third step of the process 200 involves entangling 230, in the time domain, spatially entangled resource states of a non-delayed subset with spatially entangled resource states of a delayed subset from a previous temporal layer, e.g., from a previous iteration of process 200. In one embodiment, this latter step may complete the generation of a cluster state. In another embodiment, additional spatially entangled resource states from an other non-delayed subset stemming from the same temporal layer may further be spatially entangled 235 with the entangled non-delayed subset and delayed subsets to form the cluster state, for instance.

A fourth step of the process 200 involves performing a Pauli measurement on the cluster state 240. The Pauli measurement can be performed in an informed manner, based on the results of one or more Pauli measurements made to the cluster state in previous iterations of the process 200, such that the Pauli measurement applies a gate.

The steps 210, 220, 225, 230, and 240 of the process 200 can be repeated multiple times, in a manner to apply a sequence of gates, until the quantum computation is complete. It will be noted for additional clarity that in the time domain, the performing of the Pauli measurement may be performed after the generating 210 of resource states which will serve in the next Pauli measurement 240. Indeed, multiple temporal layers may simultaneously exist in the quantum computer at a given point in time, and in an example quantum computer, a number of temporal layers may be built before making the first Pauli measurement 240.

The measurements may be performed by the measurement module 108.

In an embodiment, entangling 220 resource states can include entangling an H-type magic state with a Pauli eigenstate, and potentially other resource states, in the spatial domain, to form a spatially entangled resource state which may be used as a non-Clifford resource, included in the cluster state, in the process of performing a quantum computation.

In some other embodiments, the cluster state may not include non-Clifford resource states, and non-Clifford resource states may rather be entangled with one or more Clifford resource states in the cluster state immediately before the Pauli measurement is performed, such that the Pauli measurement applies a non-Clifford gate. In such an alternate embodiment, temporal layers may comprise only Clifford resources, and non-Clifford resources generated by the source module 102 may be entangled with one or more of the Clifford resources in the cluster state immediately before measurement in the quantum processing unit 106, thereby implementing a non-Clifford gate. For instance, the step of entangling 220 resource states in the spatial domain may include entangling 220 only one or more Pauli eigenstate, optionally with one or more squeezed state, into spatially entangled resource states forming temporal layers. The steps of delaying 225, entangling 230 in the time domain, and more generally generating the cluster state, can be performed using these latter spatially entangled resource states. The H-type magic state produced when generating 210 resource states may be entangled 245 with the cluster state subsequently to the generation of the cluster state, e.g., subsequently to step 230, and nonetheless used as a non-Clifford resource for the purpose of the quantum computation.

In any of the above embodiments referring to Fig. 17, a subset of the Clifford resource states in the cluster state may instead be squeezed states (generated by the source module 102, for example).

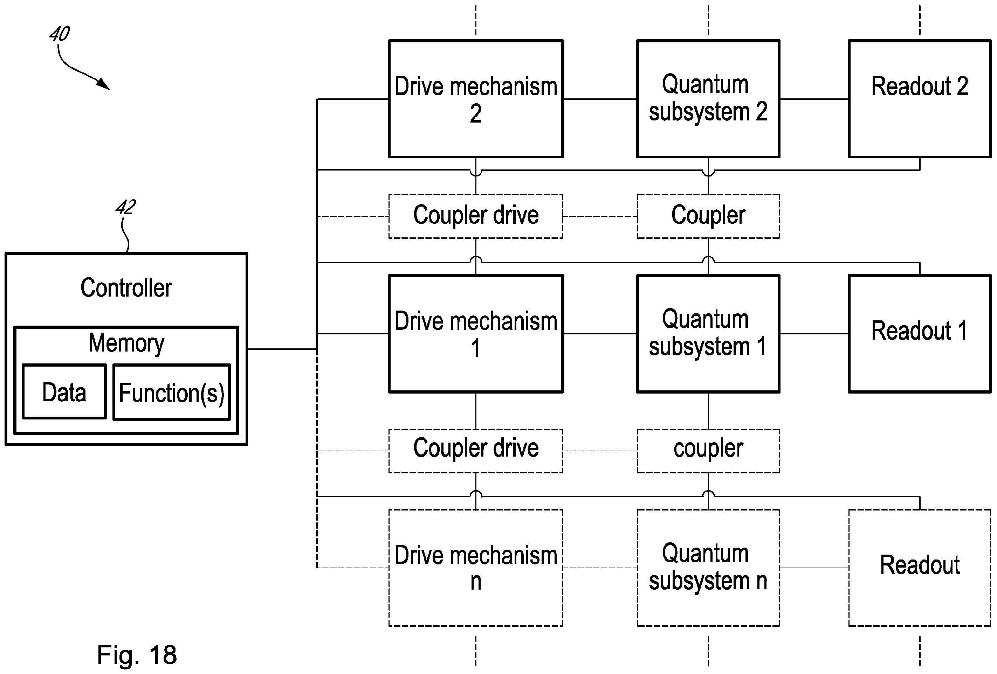

In accordance with another embodiment, H-type magic states as presented above can be useful in the context of a quantum computer operating on the basis of circuit-based quantum computations, such as, for instance, a quantum computer shown in Fig. 18. The quantum computer shown in Fig. 18 has a quantum system which includes a plurality of quantum subsystems. In the context of quantum computing, the quantum subsystems are used to host logical states and can be referred to as qubits, and the quantum system can be referred to as a quantum processor 40. The nature of the qubits, the means by which logical states are hosted in the qubits, and the means by which operations are performed between the qubits depend on the choice of architecture.

In many applications where qubits are based on bosonic encoding, for example, the logical states may be driven in some form of resonator using some form of driving hardware. The driving hardware is controlled by a component which will be referred to herein as a controller for simplicity, and which typically includes a classical computer (i.e., a computer which uses binary bits rather than qubits to encode information). The qubits are typically refrigerated to very low temperatures and insulated from the external environment. In an adiabatic quantum computing architecture, the quantum subsystems can be directly operably interconnected to one another. In circuit-based quantum computing, the quantum subsystems are typically interconnected to one another via couplers which are used to selectively control the interactions between the quantum subsystems. The couplers can also be quantum subsystems operable to host states via which the logical states of the two or more connecting quantum subsystems are to interact, and are also driven by driving hardware which can be controlled by the same controller for convenience. Readout ports can be provided via which the state of the qubits can be read, an operation which can be said to involve "measuring."

The controller 42 can be expected to include a memory which can include functions in the form of computer-readable instructions driving the operation of the controller 42, and data. The functions can include a "driving program," for instance, which, in the case of circuit-based quantum computing, can include a sequence of gates, typically referred to as a quantum circuit, stored as data in the memory. When the states of the qubits are read, the measured values can be stored in the form of data, for instance.

Performing a quantum computation can involve a quantum interaction, such as entanglement, between the physical states (which encode information) of the different quantum subsystems. However, for a quantum computation to occur, one may further actively initialize the physical states of the quantum subsystems prior to the quantum interaction (e.g., control the physical states of the quantum subsystems), and actively measure the physical states subsequently to the quantum interaction. Moreover, when performing a quantum computation in a circuit-based model, one may additionally actively control the interaction via a coupler which is changed from a configuration where it impedes interaction to a configuration where it favors interaction, and then back.

Henceforth, performing a given quantum computation can involve the steps of initializing, interacting, and measuring. Accordingly, any of the steps of preparing, initializing, interacting, and measuring may have corresponding hardware elements and an active control process associated therewith.

Any active control step may require associated elements of hardware. Moreover, in practical implementations, it is impossible to manually control the hardware associated with the active control steps in a context of the amount of time available to perform any one of these steps. Accordingly, automated control can be used to implement the active control steps. The automated control processes can take the form of associated functions defined by corresponding software modules. Accordingly, several elements of hardware, such as preparing hardware, initializing hardware, coupler control hardware, and measuring hardware may involve automated, active control in the context of performing a single quantum computation. The control functions for such hardware elements may be performed via corresponding software modules which can be in the form of computer-readable instructions driving the operation of the controller.

The components of the quantum processor, such as the quantum subsystems and some or all of the control hardware, are typically refrigerated to very low temperatures and insulated from the environment, and can therefore be said to be inside a "refrigerator," which can be a dilution refrigerator for instance. Components of the classical computer such as its processor and its non-transitory memory can be located outside the refrigerator. Electrical connections can therefore extend across an enclosure of the refrigerator, between the ambient temperature environment and the cryogenic environment. The combination of the classical computer, of the quantum processor, of the electrical connections, and of the refrigerator can be referred to collectively as a "quantum computer."

While a simplistic scenario having a minimum of 2 quantum subsystems is schematized in solid lines in Fig. 18, in practice, it can be preferred to embody quantum computers with a significantly greater number of quantum subsystems, or qubits, which can significantly affect the complexity of the overall system, both from the hardware and from the control process points of view.

In such a context of a quantum computer such as shown in Fig. 18 and operating on the basis of a circuit-based quantum computing model, H-type magic states can be generated in one or more of the quantum subsystems, and/or in one or more of the couplers, and can be used as a non-Clifford resource in the process of performing a quantum computation.

It will be understood that the expression "classical computer," or simply "computer" for short, as used herein, is not to be interpreted in a limiting manner. It is rather used in a broad sense to generally refer to the combination of some form of one or more processing units and some form of memory system accessible by the processing unit(s). The memory system can be of the non-transitory type. The use of the expression "computer" in its singular form as used herein includes within its scope the combination of two or more computers working collaboratively to perform a given function. Moreover, the expression "computer" as used herein includes within its scope the use of partial capabilities of a given processing unit. Example computers include supercomputers, desktops, laptops, smartphones, smart watches, less elaborated controller devices, etc.

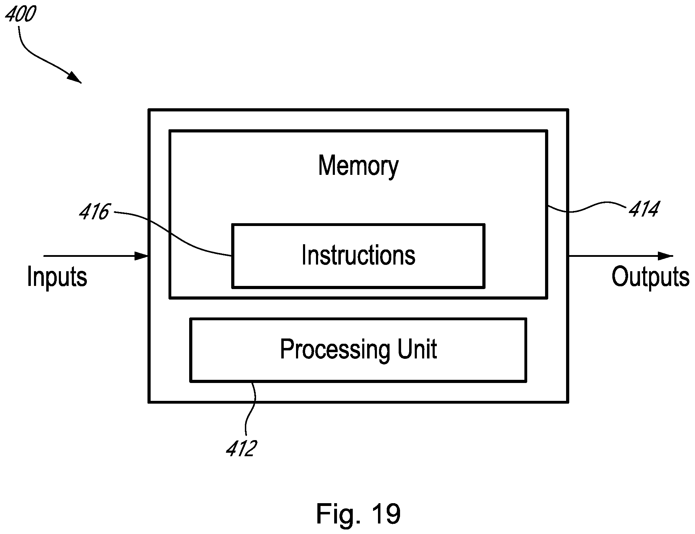

An example computer 400 is presented in Fig. 19. In this example, the computer 400 includes a processing unit 412 and a memory system 414 storing instructions 416.

A processing unit 412 can be embodied in the form of a general-purpose microprocessor or microcontroller, a digital signal processing (DSP) processor, an integrated circuit, a field programmable gate array (FPGA), a reconfigurable processor, or a programmable read-only memory (PROM), to name a few examples.

The memory system 414 can include a suitable combination of any suitable type of computer-readable memory located either internally or externally, and accessible by the processor in a wired or wireless manner, either directly or over a network such as the Internet. A computer-readable memory can be embodied in the form of random-access memory (RAM), read-only memory (ROM), compact disc read-only memory (CDROM), electro-optical memory, magneto-optical memory, erasable programmable read-only memory (EPROM), electrically erasable programmable read-only memory (EEPROM), or ferroelectric RAM (FRAM), to name a few examples.

A computer 400 can have one or more input/output (I/O) interfaces to allow communication with a human user and/or with another computer via an associated input, output, or input/output device such as a keyboard, a mouse, a touchscreen, an antenna, a port, etc. Each I/O interface can enable the computer to communicate and/or exchange data with other components, to access and connect to network resources, to serve applications, and/or to perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, Bluetooth, WiMAX), SS7 signaling network, fixed line, local area network, or wide area network, to name a few examples.

It will be understood that a computer can perform functions or processes via hardware or a combination of both hardware and software. For example, hardware can include logic gates included as part of a silicon chip of a processor. Software (e.g., an application or process) can be in the form of data such as computer-readable instructions stored in a non-transitory computer-readable memory accessible by one or more processing units. With respect to a computer or a processing unit, the expression "configured to" relates to the presence of hardware or a combination of hardware and software which is operable to perform the associated functions. Different elements of a computer, such as processor and/or memory, can be local, in part remote, or in whole remote and/or distributed and/or virtual.

The methods and systems performed by the classical computer in the context of the present disclosure may be implemented in a high-level procedural or object-oriented programming or scripting language, or a combination thereof, to communicate with or assist in the operation of a computer system, for example the controller. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically, the functionality of the program modules may be combined or distributed as desired in various embodiments. The technical solution of embodiments may be in the form of a software product. The software product may be stored in a non-volatile or non-transitory storage medium, which can be a compact disk read-only memory (CDROM), a USB flash disk, or a removable hard disk. The software product includes a number of instructions that enable a computer device (personal computer, server, or network device) to execute the methods provided by the embodiments.

The embodiments described herein are implemented by physical computer hardware. The embodiments described herein provide useful physical machines and particularly configured computer hardware arrangements. The embodiments described herein are directed to electronic and optical machines and methods implemented by electronic and optical machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

As can be understood, the examples described above and illustrated are intended to be exemplary only. The scope is indicated by the appended claims.

## Claims

1. A method of generating an H-type magic state in a quantum system, the method comprising:

   generating a Gottesman-Kitaev-Preskill (GKP) sensor state in the quantum system;
   generating a multi-peak state in the quantum system;
   generating an entangled state including performing a quantum entanglement between the GKP sensor state and the multi-peak state in the quantum system; and
   performing a measurement on the entangled state in the quantum system subsequently to said quantum entanglement, thereby generating the H-type magic state, the measurement being a Pauli measurement and including measuring at least one of two quantum mechanical observables satisfying a canonical commutation relation.

2. The method of claim 1 wherein the GKP sensor state is given by $|\phi\rangle = \sum_n |2\sqrt{2\pi}n\rangle_q$, the multi-peak state is given by $|\psi\rangle = h_1 |-\sqrt{2\pi}\rangle_q + h_0 |0\rangle_q + h_1 |\sqrt{2\pi}\rangle_q$, and the H-type magic state is $|H(p)\rangle = h_0 |0_{\mathrm{GKP}}\rangle + 2h_1 \cos(2p\sqrt{\pi}) |1_{\mathrm{GKP}}\rangle$, where $p$ is an outcome of the Pauli measurement, wherein the H-type magic state is in the form $|H(p)\rangle = \cos(\theta) |0_{\mathrm{GKP}}\rangle + \sin(\theta) |1_{\mathrm{GKP}}\rangle$ and peak heights of the multi-peak state are, when post-selecting in $p = 0$, $h_0 = \frac{2\cos(\theta)}{\sqrt{3+\cos(2\theta)}}$ and $h_1 = \frac{\sin(\theta)}{\sqrt{3+\cos(2\theta)}}$, wherein values of $\theta = \frac{(2n+1)\pi}{8}$, where $n \in [0,1,2,3]$.

3. The method of claim 1 or 2 wherein the GKP sensor state is a squeezed GKP sensor state, and wherein the squeezed GKP sensor state preferably has a peak spacing of $2\sqrt{2\pi}$.

4. The method of any preceding claim wherein the multi-peak state is a GKP state.

5. The method of any preceding claim wherein the multi-peak state is a three-peak state.

6. The method of any preceding claim wherein the multi-peak state is a cat state.

7. The method of any preceding claim wherein the quantum system is a photonic system, said quantum entanglement is performed using a beam splitter, the Pauli measurement is a homodyne measurement, and the two quantum mechanical observables are position (q) and momentum (p).

8. The method of any preceding claim wherein said generating a GKP sensor state includes performing a squeezed cat state breeding and amplification process, and wherein the GKP sensor state preferably is a displaced GKP state.

9. The method of any preceding claim wherein the H-type magic state has a fidelity of at least 0.853 (85.3%).

10. The method of any preceding claim wherein said generating a GKP sensor state and said generating a multi-peak state are performed using multiple Gaussian Boson Sampling (GBS) devices and multiplexing.

11. The method of any preceding claim wherein said measurement is a first Pauli measurement, further comprising generating a Pauli eigenstate, generating a cluster state including entangling at least the H-type magic state with the Pauli eigenstate, and applying a gate to the cluster state including performing a second Pauli measurement on the cluster state, preferably further comprising generating a squeezed state, wherein said generating the cluster state further includes entangling the squeezed state with at least the H-type magic state and the Pauli eigenstate.

12. The method of claim 11 further comprising repeating the steps of generating the cluster state and performing the second Pauli measurement on the cluster state over n iterations, until a quantum computation is completed, wherein said performing the second Pauli measurement of a given one of the n iterations is based on results of the second Pauli measurement of one or more previous ones of the n iterations, in a manner to apply the corresponding gate, wherein said generating the cluster state at a given one of the n iterations preferably further includes

producing a plurality of spatially entangled resource states,
delaying a subset of the plurality of spatially entangled resource states, and
entangling, in the time domain, a subset of the spatially entangled resource states which have not been subject to the delaying with the subset of delayed resource states from a previous one of the n iterations.

13. The method of any preceding claim wherein said measurement is a first Pauli measurement, further comprising generating a cluster state, entangling the H-type magic state with the cluster state, and applying a gate to the cluster state entangled with the H-type magic state, said applying a gate including performing a second Pauli measurement on the cluster state entangled with the H-type magic state, preferably further comprising repeating the steps of generating the cluster state and performing the second Pauli measurement over n iterations, until a quantum computation is completed, wherein said performing the second Pauli measurement of a given one of the n iterations is based on results of the second Pauli measurement of one or more previous ones of the n iterations, in a manner to apply the corresponding gate, wherein said generating the cluster state at a given one of the n iterations preferably further includes

producing a plurality of spatially entangled resource states,
delaying a subset of the plurality of spatially entangled resource states, and
entangling, in the time domain, a subset of the spatially entangled resource states which have not been subject to the delaying with the subset of delayed resource states from a previous one of the n iterations.

14. The method of any preceding claim wherein the H-type magic state is generated in a first quantum subsystem, further comprising generating a Pauli eigenstate in a second quantum subsystem, applying a gate between the first quantum subsystem and the second quantum subsystem including operating a coupler to cause a quantum interaction between the H-type magic state and the Pauli eigenstate, and measuring the state in the first quantum subsystem and in the second quantum subsystem following the quantum interaction.

Fig. 1

EP 4 600 872 A1

Fig. 2

Fig. 3A

Fig. 3B

Fig. 4

EP 4 600 872 A1

Fig. 5A

Fig. 5B

EP 4 600 872 A1

Fig. 5C

EP 4 600 872 A1

Fig. 6

Sets the proper
spacing

$|\psi(\xi)\rangle$ — $S(k)$ — $p = 0$

$|\phi\rangle$ — $|H\rangle$

Fig. 7A

Fig. 7B

EP 4 600 872 A1

Fig. 8

EP 4 600 872 A1

Fig. 9

Fig. 10B

GBS total success prob

Success prob(ξ)

Fig. 10C

[4,4]
[7,7]
[10,10]
[13,13]
[18,18]

Relative probability

GBS success prob of each outcome

[4,4]
[7,7]
[10,10]
[13,13]
[18,18]

Prob(ξ)

Fig. 10A

Fig. 11A

Fig. 11B

Fig. 11C

Fig. 11D

Fig. 12

Fig. 13

Fig. 14

EP 4 600 872 A1

Fig. 15

Fig. 16

Fig. 17

EP 4 600 872 A1

Fig. 18

**400**

Memory

**416**
Instructions

**414**

Inputs

Outputs

Processing Unit

**412**

Fig. 19

EP 4 600 872 A1

Europäisches Patentamt

European Patent Office

Office européen des brevets

**EUROPEAN SEARCH REPORT**

**Application Number**

EP 25 15 6545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLAYNEY W WALSHE ET AL: "Continuous-variable gate teleportation and bosonic-code error correction", ARXIV.ORG, CORNELL UNIVERSITY LIBRARY, 201 OLIN LIBRARY CORNELL UNIVERSITY ITHACA, NY 14853, 18 December 2020 (2020-12-18), XP081841658, DOI: 10.1103/PHYSREVA.102.062411 | 1-4,6-14 | INV. G06N10/70 ADD. G06N10/40 |
| A | * page 1 - page 14, left-hand column, paragraph 2 * * Appendices A-C * | 5 | |
| | ----- | | |
| A | LUCAS J MENSEN ET AL: "Phase-space methods for representing, manipulating, and correcting Gottesman-Kitaev-Preskill qubits", ARXIV.ORG, CORNELL UNIVERSITY LIBRARY, 201 OLIN LIBRARY CORNELL UNIVERSITY ITHACA, NY 14853, 25 August 2021 (2021-08-25), XP091024814, DOI: 10.1103/PHYSREVA.104.022408 * page 1 - page 23, right-hand column, paragraph 3 * * Appendices A-E * | 1-14 | TECHNICAL FIELDS SEARCHED (IPC) G06N |
| | ----- | | |
| A | BARAGIOLA BEN Q. ET AL: "All-Gaussian Universality and Fault Tolerance with the Gottesman-Kitaev-Preskill Code", PHYSICAL REVIEW LETTERS, vol. 123, no. 20, 13 November 2019 (2019-11-13), XP093288882, US ISSN: 0031-9007, DOI: 10.1103/PhysRevLett.123.200502 * page 1 - page 5, left-hand column, paragraph 4 * | 1-14 | |
| | ----- | | |
| | -/-- | | |

The present search report has been drawn up for all claims

| Place of search | Date of completion of the search | Examiner |
|---|---|---|
| The Hague | 25 June 2025 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 6545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIVAPRASAD OMANAKUTTAN ET AL: "Spin squeezed GKP codes for quantum error correction in atomic ensembles", ARXIV.ORG, CORNELL UNIVERSITY LIBRARY, 201 OLIN LIBRARY CORNELL UNIVERSITY ITHACA, NY 14853, 19 June 2023 (2023-06-19), XP091540930, * the whole document * | 1-14 | |
| A | ANTHONY J BRADY ET AL: "Advances in Bosonic Quantum Error Correction with Gottesman-Kitaev-Preskill Codes: Theory, Engineering and Applications", ARXIV.ORG, CORNELL UNIVERSITY LIBRARY, 201 OLIN LIBRARY CORNELL UNIVERSITY ITHACA, NY 14853, 5 August 2023 (2023-08-05), XP091587872, * the whole document * | 1-14 | |

**TECHNICAL FIELDS SEARCHED (IPC)**

The present search report has been drawn up for all claims

| Place of search | Date of completion of the search | Examiner |
|---|---|---|
| The Hague | 25 June 2025 | Volkmer, Markus |

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11341428 B, Bourassa

**Non-patent literature cited in the description**

- **D. GOTTESMAN et al.** Encoding a Qubit in an Oscillator. *Physical Review Letters*, 2001, vol. A (64), 012310